# EUROPEAN PATENT APPLICATION

(11) **EP 4 700 606 A1**
(43) Date of publication of application: **25.02.2026**
(21) Application number: 25197217.0
(22) Date of filing: 21.08.2025
(51) Int. Cl.: G06F 16/50

(54) **INFORMATION PROCESSING APPARATUS, INFORMATION PROCESSING METHOD, AND PROGRAM**

(30) Priority: 22.08.2024 JP 2024140828
(71) Applicant: CANON KABUSHIKI KAISHA, Ohta-ku Tokyo 146-8501 (JP)
(72) Inventor: ISHIKAWA, Rei, Tokyo, 146-8501 (JP)
(74) Representative: TBK

(57) **Abstract**

An information processing apparatus (101) includes a management unit (121) configured to manage images of a user; a sort unit (125) configured to sort out, from the managed images, an image that matches a rule selected by the user; and a display control unit (122) configured to display a first setting screen for the user to select the rule, wherein the first setting screen (1100) includes, as the rule, a first rule generated by the user and a second rule for sorting out an image that does not match the first rule (S1303).

## Description

### TECHNICAL FIELD

The present disclosure relates to processing of sorting out a desired image from a plurality of images.

### BACKGROUND

There is a method of sorting out an image that matches a predetermined allocation rule from a plurality of images.

Japanese Patent Laid-Open No. 2013-210872 discloses a method of enabling a user himself/herself to generate an allocation rule for a desired image to be automatically sorted out.

### SUMMARY

There are cases in which the user desires to transmit specific images of a plurality of images obtained by image capturing to an external storage A, and to transmit images other than the specific images to an external storage B. In this case, in the method of Japanese Patent Laid-Open No. 2013-45352, it becomes necessary for the user to generate an allocation rule 1 for allocating specific images, and to further generate an allocation rule 2 for allocating images other than the specific images. If the allocation rule 1 is a rule for sorting out images having an object category of animal, in order to generate the allocation rule 2, it is necessary to generate an allocation rule by designating conditions so as to select all the object categories other than animal. In particular, in a case where the allocation rule 1 is a rule for allocating images based on a plurality of conditions, in order to generate the allocation rule 2, the user needs to designate the plurality of conditions one by one, which is complicated. As described above, generating a rule for sorting out images other than specific images becomes a burden on the user.

The present disclosure in its first aspect provides an information processing apparatus as specified in claim 1. Optional features are specified in claim 2 to 12.

The present disclosure in its second aspect provides an information processing apparatus as specified in claim 13.

The present disclosure in its third aspect provides an information processing method as specified in claim 14

The present disclosure in its forth aspect provides program as specified in claim 15.

According to the technique of the present disclosure, the burden on the user in sorting out images can be reduce.

### BRIEF DESCRIPTION OF THE DRAWINGS

Figs. 1A to 1C are diagrams illustrating an example of a system configuration;
Fig. 2 is a flowchart for describing the flow of overall processing of an image management apparatus;
Fig. 3 is a diagram illustrating an example of an image management table;
Fig. 4 is a generation transmission rule management table;
Figs. 5A to 5D are diagrams illustrating an example of a transmission rule list screen and a transmission rule generation screen;
Fig. 6 is a flowchart for describing transmission rule generation processing;
Fig. 7 is a flowchart for describing transmission rule deletion processing;
Figs. 8A to 8F are diagrams illustrating an example of a transmission setting management table;
Figs. 9A to 9C are diagrams illustrating an example of an image management service list screen and an image management service setting screen;
Fig. 10 is a flowchart for describing processing for the image management service setting screen;
Figs. 11A to 11D are diagrams illustrating an example of a transmission rule setting screen;
Fig. 12 is a flowchart for describing setting processing of a transmission rule;
Figs. 13A and 13B are flowcharts for describing transmission rule displaying processing or complete button setting processing;
Fig. 14 is a flowchart for describing image transmission processing;
Figs. 15A to 15C are diagrams for describing a plurality of generation transmission rules; and
Fig. 16 is a flowchart for describing transmission rule deletion processing.

### DESCRIPTION OF THE EMBODIMENTS

Hereinafter, referring to the attached drawings, the techniques of the present disclosure will be described in detail based on embodiments. It should be noted that the configurations illustrated in the following embodiments are merely examples, and the techniques of the present disclosure are not limited to the illustrated configurations.

### <Embodiment 1>

### [System Configuration]

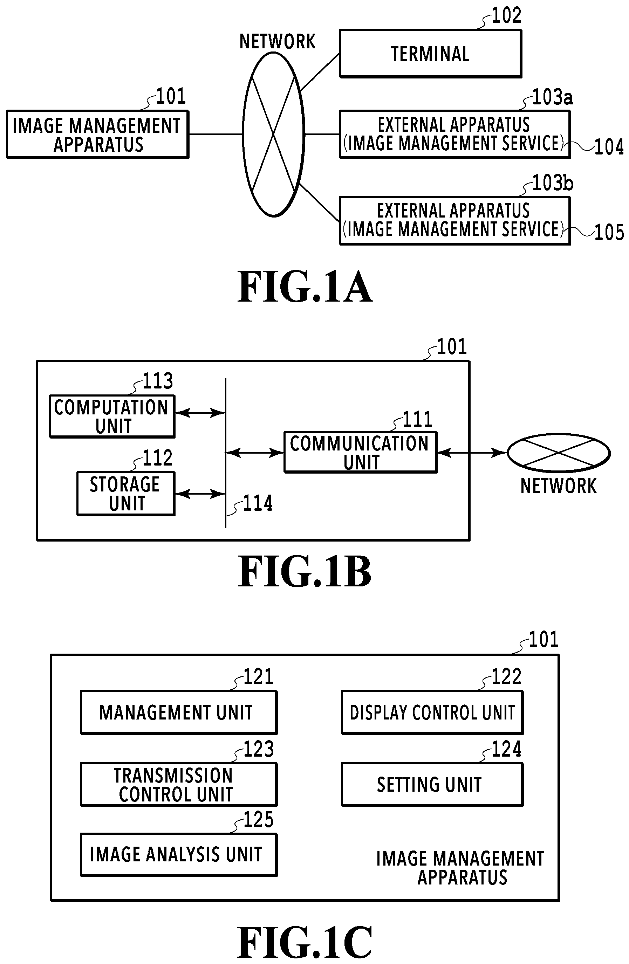

Fig. 1A is a diagram illustrating an example of the configuration of an image management system, which is an information processing system of the present embodiment. The image management system includes an image management apparatus 101, a terminal 102, and external apparatuses 103. The image management apparatus 101 is connected to one or more external apparatuses 103 and one or more terminals 102 of users via a network.

The image management apparatus 101 is an information processing apparatus that provides a service of receiving the data of an image transmitted from a camera or terminal of a user who has an account, and saving the received data of the image. The service provided by the image management apparatus 101 is, for example, a cloud service that uploads and saves captured images that have been captured by a digital camera in real time, by utilizing a network such as Wi-Fi. Furthermore, the image management apparatus 101 is described as having a function of automatically sorting out the saved images. In addition, the image management apparatus 101 provides a service of automatically transmitting the sorted out images to the external apparatuses 103. By automatically transmitting the images to the external apparatuses 103 in this manner, it is possible to suppress shortage of storage capacity.

In the present embodiment, the user is a user who has an account for the service provided by the image management apparatus 101. The user can generate the account via the terminal 102 that is owned by the user and that is connected to the network.

The terminal 102 is an apparatus including a display unit such as a touch panel, and an operation unit, and is, for example, a PC, a tablet, a smartphone, a camera, or the like. Although the terminal 102 is assumed to be a terminal that transmits images to the image management apparatus 101, the user may transmit images to the image management apparatus 101 from a terminal that is different from the terminal 102.

The image management apparatus 101 can display a screen on the display unit of the terminal 102. The user can give various instructions to the image management apparatus 101 via the screen. The image management apparatus 101 has a function of receiving an input operation performed by the user via the terminal 102. For example, the user can perform browsing, deletion, and the like of the user's images managed by the image management apparatus 101 via the screen displayed on the terminal 102. In addition, the user can change the settings related to services operated by the image management apparatus 101 via the screen.

Each of the external apparatuses 103a and 103b is, for example, an information processing apparatus or a server on a cloud that provides a service (called the image management service) such as a cloud storage service subscribed by the user for the purpose of storing, sharing, and editing images. The services provided by each of the external apparatuses 103a and 103b may be called external services, so as to be distinguished from the services provided by the image management apparatus 101. When referring to either of the external apparatuses 103a and 103b out, it may be written as the external apparatus 103. The number of the external apparatuses 103, that is, the number of image management services, is not limited. The image management apparatus 101 transmits an image designated by the external apparatus 103. In the present embodiment, a description will be given by assuming that the name of an image management service 104 provided by the external apparatus 103a is "Smart In", and the name of an image management service 105 provided by the external apparatus 103b is "Huge Box." When written as "Smart In", it may refer to the image management service 104 or the external apparatus 103a, and when written as "Huge Box", it may refer to the image management service 105 or the external apparatus 103b.

The network is, for example, a LAN (Local Area Network), the Internet, or the like. The image management apparatus 101, the external apparatuses 103, and the terminal 102 of the user are connected via the network, so that mutual communication among these apparatuses can be realized.

Although images are described as still images in the present embodiment, images may be moving images. It is assumed that the image management apparatus 101, the terminal 102, and the external apparatuses 103a and 103b can process both still images and moving images. Unless otherwise noted, images are described as including the concepts of both moving images and still images.

### [Hardware Configuration]

Fig. 1B is a diagram for describing a hardware configuration of the image management apparatus 101, which is the information processing apparatus according to the present embodiment. The image management apparatus 101 is realized as, for example, a server on a cloud.

A computation unit 113 is a unit that performs transmission and reception and storage processing of data. The computation unit 113 is realized by, for example, a CPU (Central Processing Unit) or the like. The computation unit 113 may include a GPU (Graphics Processing Unit), instead of the CPU or in addition to the CPU.

A storage unit 112 is a unit that stores images, transmission rules, a program executed by the computation unit 113, and contents received from the terminal 102 via a communication unit 111. The storage unit 112 includes, for example, a RAM (Random Access Memory), a ROM (Read Only Memory), an HDD (Hard Disk Drive), and the like. It is assumed that the computation unit 113 loads a program stored in the ROM or the HDD in the storage unit 112 into the RAM in the storage unit 112, so as to execute the program. In addition, it is assumed that the computation unit 113 uses the storage unit 112 as a temporary storage area of data.

The communication unit 111 is a unit that is connected to the network, and performs transmission and reception of information to and from the terminal 102 and the external apparatus 103. The communication unit 111 is realized by, for example, a network card or the like. A bus 114 connects the communication unit 111, the storage unit 112, and the computation unit 113.

In the present embodiment, although the image management apparatus 101 is described as an apparatus for convenience of description, the image management apparatus 101 may be a system in which a plurality of information processing apparatuses behave like one image management apparatus 101.

### [Functional Configuration]

Fig. 1C is a diagram illustrating an example of the functional configuration of the image management apparatus 101. The image management apparatus 101 includes a function of storing images, a function of receiving inputs from the terminal 102, a function of transmitting screens to the terminal 102, and a function of transmitting images to the image management service. Specifically, the image management apparatus 101 includes each of the following functional units.

A management unit 121 stores images of users in the storage unit 112 and manages the images. In addition, the management unit 121 also functions as a rule management unit that stores a generation transmission rule, which will be described later, in the storage unit 112, and manages the generation transmission rule. In addition, the management unit 121 stores settings of the image management services 104 and 105 in the storage unit 112 and manages the settings. The management unit 121 acquires these items of information from the storage unit 112.

A display control unit 122 performs control for transmitting the information of a screen to the terminal 102 via the communication unit 111, and displaying the screen on the display unit of the terminal 102. In the present embodiment, it is assumed that the processing of the display control unit 122 displaying the screen on the terminal 102 is the processing of the display control unit 122 generating information of a screen, and causing the communication unit 111 to transmit the information of the screen to the terminal 102, so that the screen is displayed on the terminal 102.

A setting unit 124 receives instructions of the user for the screen from the terminal 102 via the communication unit 111. A screen for performing settings of the image management service includes an instruction UI for instructing transmission of images that match a generated transmission rule, and transmission of images that do not match the generated transmission rule. Details will be described later.

A transmission control unit 123 transmits the images managed by the management unit 121 to the image management services 104 and 105 via the communication unit 111. A description will be given by assuming that transmitting images to the image management service refers to transmitting images toward an external apparatus, so that the external apparatus providing the image management service receives the images. In addition, the transmission control unit 123 also functions as a classifying unit that performs processing of sorting out (classifying) images to see whether the images match a transmission rule.

An image analysis unit 125 performs image recognition on the images managed by the management unit 121. Details will be described later.

Each of the functional units illustrated in Fig. 1C is realized by the computation unit 113 such as a CPU reading out the program stored in the ROM, the HDD, or the like included in the storage unit 112 into the RAM included in the storage unit 112, and executing the program. Also, for example, hardware such as a GPU (Graphics Processing Unit) or FPGA (Field Programmable Gate Array) for accelerating computation may be utilized. Each function may be realized by cooperation between software and hardware such as a dedicated IC, or a part or all of the functions may be realized only by hardware. Alternatively, a part or all of the functions may be realized by hardware, such as an ASIC or an electronic circuit.

### [Flow of Overall Processing]

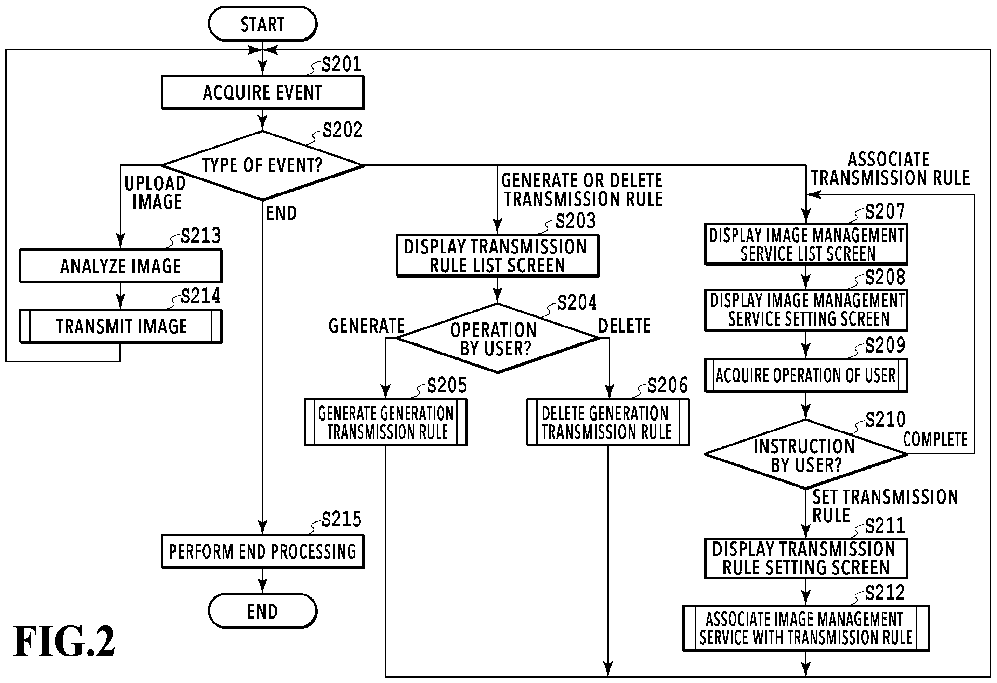

Fig. 2 is a flowchart illustrating the flow of processing by the image management apparatus 101 in a case where an instruction given by the user via the terminal 102 is acquired. The processing according to the flowchart in Fig. 2 is performed by loading a program code stored in the ROM or the like of the storage unit 112 into the RAM of the storage unit 112, and executing the program code by the computation unit 113 such as a CPU. Also, a part or all of the functions in the steps in Fig. 2 may be realized by hardware, such as an ASIC or an electronic circuit. The symbol "S" in the description of each processing means a step in the flowchart, and the same also applies to the subsequent flowcharts.

In S201, the computation unit 113 acquires an event, such as a user operation for the terminal 102. In S202, the computation unit 113 switches the subsequent processing according to the type of the event acquired in S201.

In S202, if the computation unit 113 determines that an event of the generation of a generation transmission rule or the deletion of the generation transmission rule is received from the terminal 102 of the user, the computation unit 113 performs processing in S203 to S206. As a result, the generation transmission rule is generated, or the generation transmission rule is deleted. Details will be described later. If S205 or S206 ends, the computation unit 113 returns to S201 to wait for an event again.

In addition, in S202, if the computation unit 113 determines that an event for associating a transmission rule with the image management service is received from the terminal 102 of the user, the computation unit 113 performs processing in S207 to S212. In S207 to S212, processing is performed that selects a target image management service, and associates the selected image management service with a transmission service. Details will be described later. If S212 ends, the computation unit 113 returns to S201 to wait for an event again.

In addition, in S202, if the computation unit 113 acquires an event that an image of the user has been uploaded to the image management apparatus 101, the processing proceeds to S213.

In S213, the computation unit 113 analyzes the uploaded image.

In S214, the computation unit 113 performs processing of transmitting the uploaded image to the external apparatuses that provide the image management services 104 and 105. Details will be described later. If S214 ends, the computation unit 113 returns to S201 to wait for an event again.

If the computation unit 113 acquires an event for ending the processing in S202, the processing proceeds to S215. In S215, the computation unit 113 performs end processing, so that the flowchart in Fig. 2 ends.

### [Image Analysis]

The image analysis performed in S213 is performed by the image analysis unit 125. In the image analysis in the present embodiment, it is assumed that, as an example, object classifying processing is performed. The object classifying processing is processing of extracting an object included in an image to be analyzed, and identifying the classification (category) of the extracted object. In the present embodiment, a description will be given by assuming that there are three values for the object category, i.e., "food", "animal", and "landscape." The image analysis unit 125 identifies 0 or one or more values for the object category for one image. The number of values of the object category being 0 indicates that an object included in an image does not correspond to any of "food", "animal", and "landscape." The object category recognized by the image analysis unit 125 may be other than "food", "animal", and "landscape."

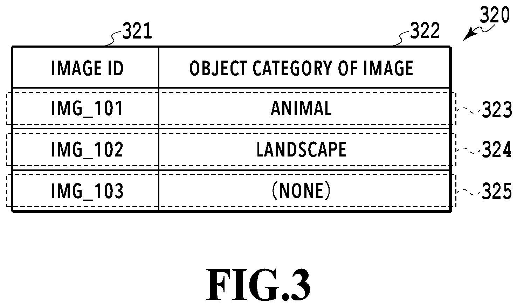

Fig. 3 is a diagram illustrating an example of an image management table 320 for the image management apparatus 101 to manage images uploaded to the image management apparatus 101 by a certain user A. In the image management table 320, the value of the image ID for uniquely identifying an image is held in a column 321, and the value of the object category determined as a result of the analysis in S213 is held in a column 322, respectively. In the image management table 320, the value of an image ID and the value of the object category included in the image are associated with each other. If the analysis in S213 ends, one record holding the information of an image subjected to the analysis is added to the image management table 320 in Fig. 3.

For example, assume that in S213, the object category of an object included in the image indicated by an image ID "IMG_101" has been determined to be "animal." In this case, in a row 323 in Fig. 3 in which the information of the image having an image ID of "IMG_101" is held, "animal" is held in the column 322 as the value of the object category. Similarly, in a row 324 in which the information of an image having an image ID of "IMG_102" is held, "landscape", which is a result of the analysis, is held as the value of the object category. In addition, assume that in S213, the object category of an object included in an image having an image ID of "IMG_103" does not corresponding to any of "food", "animal", and "landscape." In this case, in a row 325 in which the information of the image having an image ID of "IMG_103" is held, "(none)" is held in the column 322 as the value of the object category.

### [Regarding Transmission Rule]

The image management apparatus 101 of the present embodiment can sort out an image that matches a transmission rule from the images managed by the management unit 121. This sorting out processing is also called "classifying processing." In addition, a transmission rule may also be called a classifying condition, a classifying rule, an allocation rule, and the like.

In addition, the image management apparatus 101 has a function of automatically transmitting an image that has been sorted out to match a certain transmission rule to the image management service associated with the transmission rule. For example, the user associates a transmission rule 1 with the image management service 104, and associates a transmission rule 2 with the image management service 105. Then, it is possible to set images that match the transmission rule 1 to be automatically transmitted to the image management service 104, and to set images that match the transmission rule 2 to be automatically transmitted to the image management service 105.

In the present embodiment, a description will be given by assuming that there are a generation transmission rule and a non-corresponding rule as transmission rules. Although a generation transmission rule may be a transmission rule generated in advance, a description will be given in the present embodiment by assuming that a generation transmission rule is a transmission rule generated by the user.

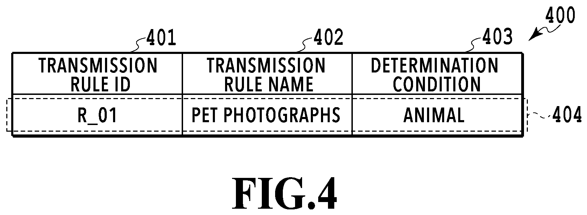

Fig. 4 is a diagram illustrating a generation transmission rule management table 400 for managing generation transmission rules. The generation transmission rule management table 400 includes a column 401 that holds the value of a transmission rule ID for uniquely identifying a generation transmission rule, a column 402 that holds the transmission rule name that is the name of a generation transmission rule, and a column 403 that holds the value of a determination condition. The value of a determination condition received from the terminal 102 is held in the column 403.

As illustrated in FIG. 4, it is assumed that the generation transmission rule in the present embodiment includes, as a determination condition for sorting out images, the value of a object category of images to be sorted out. For example, the user can generate a new generation transmission rule by selecting at least one of "food", "animal", and "landscape", which are the values of the object categories, as a determination condition. For example, assume that the user has selected "animal" as a determination condition to generate a generation transmission rule. In this case, the image corresponding to "IMG_101" in Fig. 3, which is the image that has been analyzed to include an animal, is selected from uploaded images of a specific user as matching the generation transmission rule.

In the present embodiment, although a determination condition constituting a generation transmission rule is described as including one type of determination condition for determining the object category of an image, the determination condition may be an item other than the object category. Alternatively, a plurality of types of determination conditions may be included in a generation transmission rule.

For example, whether or not an image includes the face of a specific human figure may be included in a determination condition. In this case, the management unit 121 associates face information, such as the feature amount of the face, the name of the human figure, and the like with an image ID, and stores the face information in the storage unit 112. In addition, the image analysis unit 125 analyzes whether or not a corresponding face is included in an image based on the feature amount of a face. The display control unit 122 displays the name of the human figure on a screen, and determines the face information to be used as the determination condition based on an input instruction from the user. In a case where the face information obtained by recognizing an image by the image analysis unit 125 is consistent with the face information indicated by the determination condition, it is determined to match the determination condition.

In addition, the facial expression, such as whether a human figure's face is a smiling face, and whether the eyes are closed, may be included in determination conditions. In this case, the image analysis unit 125 identifies whether the human figure's face included in an image is a smiling face or the eyes are closed, based on the feature amount indicating a smiling face or closed eyes prepared in advance.

In addition, there may be a determination condition for sorting out images that have not failed to be captured. In addition, a determination condition may be a condition based on the shooting information embedded in an image. For example, a determination condition may be based on the information of the time when an image has been captured, the image capturing apparatus used for capturing of the image, and the location where the image has been captured.

In addition, a determination condition included in a generation transmission rule may be a determination condition that combines the image analysis result and shooting information described above.

In addition, in the present embodiment, as a transmission rule for sorting out images that do not correspond to a generation transmission rule, "a non-corresponding rule" is automatically included in a transmission rule that can be selected by the user. Without "non-corresponding rule", in a case where the user desires to sort out images that do not match a generation transmission rule, a determination condition must be selected so as not to correspond to the generation transmission rule to generate a new generation transmission rule. In the present embodiment, for the sake of description, the determination condition is to be selected from the values "animal", "food", and "landscape." The number of selectable values for selecting a determination condition may be further increased, and it becomes a burden on the user to generate a generation transmission rule for sorting out images that do not correspond to the generation transmission rule. Therefore, in the present embodiment, a description will be given of a method that enables sorting out of images that do not correspond to a generation transmission rule, by making it possible to automatically select the "non-corresponding rule" in a case where there is the generation transmission rule.

### [Generation of Generation Transmission Rule and Flow of Deletion Processing]

A description will be given of S203 to S206 in Fig. 2 that are performed in a case where the image management apparatus 101 receives an instruction of generation of a generation transmission rule or deletion of a generation transmission rule from the terminal 102 of the user.

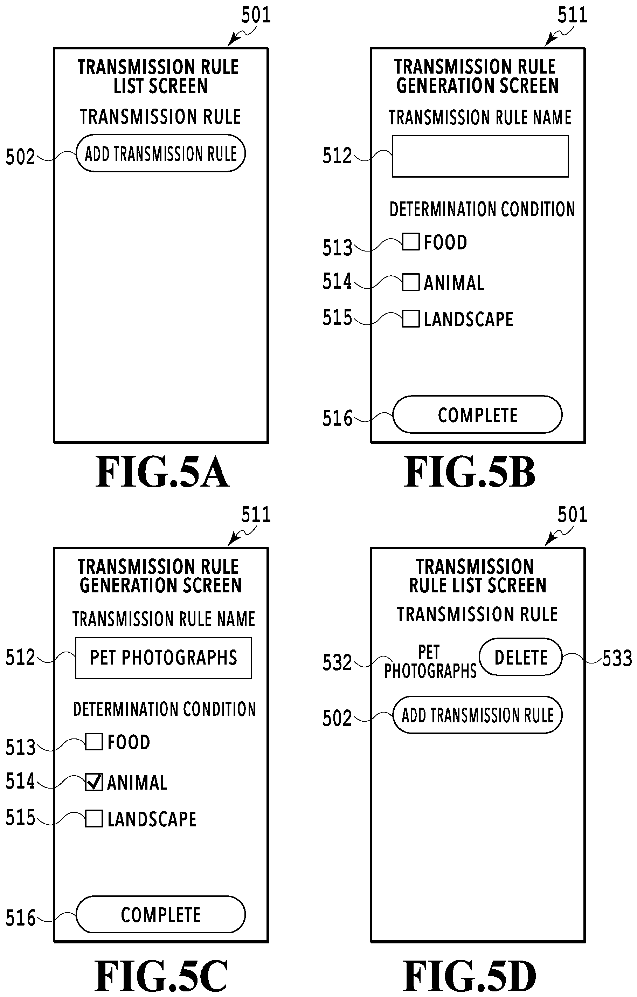

In S203 in Fig. 2, the display control unit 122 displays a transmission rule list screen 501 (refer to Figs. 5A to 5D) on the terminal 102.

In S204 in Fig. 2, the display control unit 122 receives the content of an operation performed by the user via the transmission rule list screen 501, and determines whether the content of the operation by the user is an operation for generating a generation transmission rule, or an operation for deleting a generation transmission rule.

Fig. 5A and Fig. 5D are diagrams illustrating examples of the transmission rule list screen 501, which is a screen that displays a list of generation transmission rules. Fig. 5A is the transmission rule list screen 501 displayed in a case where there is no generation transmission rule.

A transmission rule generation button 502 is a button for the user to give an instruction for newly generating a generation transmission rule. In a case where the transmission rule generation button 502 is pressed by the user, the terminal 102 transmits an instruction for generating a generation transmission rule to the image management apparatus 101.

In S204, in a case where the display control unit 122 determines that it is the operation for generating a generation transmission rule, the processing proceeds to S205. In S205, addition processing of a transmission rule is performed.

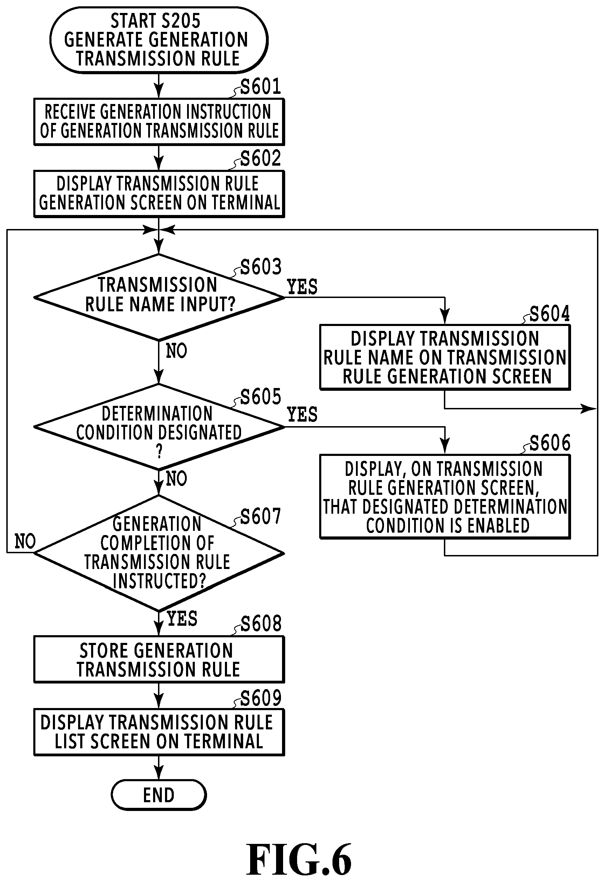

Fig. 6 is a flowchart for describing the details of the processing performed by the image management apparatus 101 in S205. The processing illustrated in Fig. 6 is realized by the computation unit 113 of the image management apparatus 101 executing the program stored in the storage unit 112. A part or all of the functions of the steps in Fig. 6 may be realized by hardware, such as an ASIC or an electronic circuit.

In S601, the setting unit 124 receives a generation instruction of a generation transmission rule from the terminal 102.

In S602, the display control unit 122 displays a transmission rule generation screen 511 (refer to Fig. 5B) on the terminal 102.

Fig. 5B is a diagram illustrating an example of the transmission rule generation screen 511 displayed on the terminal 102 as the result of S602. An input field 512 included in the transmission rule generation screen 511 is an input column for the user to input the name of a generation transmission rule to be generated.

In S603, the setting unit 124 determines whether a text has been input to the input field 512 of the transmission rule generation screen 511. If the setting unit 124 determines that an input has been made to the input field 512 (YES in S603), the processing proceeds to S604.

In S604, the display control unit 122 receives the text that has been input to the input field 512, and the display control unit 122 displays, on the terminal 102, the transmission rule generation screen 511 in which the received text is displayed. Then, the processing returns to S603.

On the other hand, if the setting unit 124 determines that a text has not been input to the input field 512 (NO in S603), the processing proceeds to S605.

In S605, the setting unit 124 determines whether a determination condition is designated. If the setting unit 124 determines that the determination condition is designated (YES in S605), the processing proceeds to S606.

Check boxes 513 to 515 included in the transmission rule generation screen 511 are check boxes for designating a determination condition of the generation transmission rule to be generated. The check box 513 is a check box for an instruction to include "food" in a determination condition. The check box 514 is a check box for an instruction to include "animal" in the determination condition. The check box 515 is a check box for an instruction to include "landscape" in the determination condition. If any of the check boxes 513 to 515 is in a selected state, the setting unit 124 determines that the determination condition has been designated.

In S606, the display control unit 122 receives the information indicating the determination condition designated by the user, and displays, on the terminal 102, the transmission rule generation screen 511 in which the check box indicating the received determination condition is in a selected state. Then, the processing returns to S603.

It should be noted that in a case where any of the check boxes 513 to 515 is pressed to be in a non-selected state from the selected state, the terminal 102 transmits, to the image management apparatus 101, an instruction for canceling the designation of the corresponding one of "food", "animal", and "landscape" as the determination condition of the transmission rule.

On the other hand, if the setting unit 124 determines that the determination condition has not been designated (NO in S605), the processing proceeds to S607.

In S607, the setting unit 124 determines whether an instruction of the generation completion of the generation transmission rule has been received from the terminal 102. In a case where a complete button 516 included in the transmission rule generation screen 511 is pressed by the user, the terminal 102 transmits the instruction of the generation completion of the generation transmission rule to the image management apparatus 101, and the setting unit 124 receives the instruction of the generation completion of the generation transmission rule. If the setting unit 124 determines that the instruction of the generation completion of the generation transmission rule has been received (YES in S607), the processing proceeds to S608. If the setting unit 124 determines that the instruction of the generation completion of the generation transmission rule has not been received (NO in S607), the processing returns to S603.

In S608, the management unit 121 generates the value of the transmission rule ID for identifying the generation transmission rule. Then, the management unit 121 associates the value of the transmission rule ID, the transmission rule name received in S604, and the determination condition received in S606, and stores them in the storage unit 112. Then, the processing proceeds to S609.

For example, assume that the flowchart in Fig. 6 is started in a state where there is no generation transmission rule. In S602, the transmission rule generation screen 511 illustrated in Fig. 5B is displayed. Assume that the user operates the terminal to input "pet photographs" to the input field 512 of the transmission rule generation screen 511, and performs an operation of pressing the check box 514 corresponding to "animal" of the determination condition so that the check box 514 is in the selected state. In this case, the terminal 102 transmits, to the image management apparatus 101, the information indicating "pet photographs" as the transmission rule name and "animal" as the determination condition. Therefore, in the image management apparatus 101, S603 is determined to be YES, and "pet photographs" is received as the transmission rule name in S604. Then, S605 is determined to be YES, and "animal" is received as the determination condition in S606. Then, the transmission rule generation screen 511 illustrated in Fig. 5C is displayed on the terminal 102.

If the user presses the complete button 516 of the transmission rule generation screen 511 illustrated in Fig. 5C, in the image management apparatus 101, S607 is determined to be YES, and the processing proceeds to S608. In S608, as illustrated in Fig. 4, the management unit 121 associates the issued transmission rule ID "R_01" with the transmission rule name "pet photographs" and the determination condition "animal", and stores them in the generation transmission rule management table 400.

In S609, the display control unit 122 ends displaying of the transmission rule generation screen 511, and displays the updated transmission rule list screen 501 on the terminal 102. Then, the flowchart in Fig. 6 ends.

Fig. 5D is a diagram illustrating an example of the transmission rule list screen 501 displayed in a case where there is a generation transmission rule. A label 532 indicates that a transmission rule exists the name of which is "pet photographs." That is, Fig. 5D illustrates the transmission rule list screen 501 displayed in a case where the generation transmission rule management table 400 as illustrated in Fig. 4 is stored.

A deletion button 533 is a button for the user to instruct deletion of the generation transmission rule indicated by the label 532. In a case where the deletion button 533 is pressed, the terminal 102 transmits, to the image management apparatus 101, an instruction for deleting the generation transmission rule corresponding to the name displayed in the label 532.

Next, a description will be given of the processing in a case where, in S204 in Fig. 2, the display control unit 122 determines that the content of the operation performed by the user via the transmission rule list screen 501 is the operation of deleting the generation transmission rule. If it is determined to be the operation of deleting the generation transmission rule, the processing proceeds to S206. That is, if the deletion button 533 is pressed, the processing proceeds to S206.

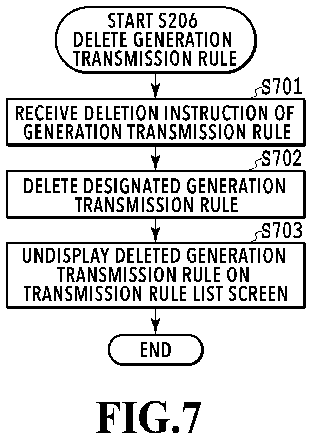

Fig. 7 is a flowchart for describing the deletion processing of the generation transmission rule to be executed in the image management apparatus 101 in S206. The processing illustrated in Fig. 7 is realized by the computation unit 113 of the image management apparatus 101 executing the program stored in the storage unit 112. A part or all of the functions of the steps in Fig. 7 may be realized by hardware, such as an ASIC or an electronic circuit.

In S701, the setting unit 124 receives a deletion instruction of the generation transmission rule from the terminal 102. For example, a description will be given by assuming that the user has pressed the deletion button 533 for the transmission rule having a transmission rule name of "pet photographs" and a transmission rule ID of "R_01" in the transmission rule list screen 501 in Fig. 5D. In this case, the terminal 102 transmits an instruction for deleting the generation transmission rule having a transmission rule ID of "R_01", and the setting unit 124 receives the instruction.

In S702, the management unit 121 deletes the information of the generation transmission rule designated in S701 from the generation transmission rule management table 400. For example, in a case where the generation transmission rule management table 400 in Fig. 4 is stored, a row 404 in which the transmission rule ID "R_01" is held in the column 401 is deleted. As a result, the number of generation transmission rules stored in the storage unit 112 by the management unit 121 becomes 0.

In S703, the display control unit 122 displays, on the terminal 102, the transmission rule list screen 501 in which the transmission rule name corresponding to the generation transmission rule deleted in S702 is undisplayed. That is, the transmission rule list screen 501 in Fig. 5A is displayed on the terminal 102. Then, the flowchart ends.

### [Selection Processing of Image Management Service Associated with Transmission Rule]

Transmission rules (the non-corresponding rule and the generation transmission rules managed in the generation transmission rule management table 400) can be associated with the image management service. By associating a transmission rule with the image management service, an image matching the transmission rule can be automatically transmitted to the image management service associated with the transmission rule. Since the transmission destination can thus be changed according to the content of an image, the burden on the user for determining the transmission destination while checking the image is suppressed.

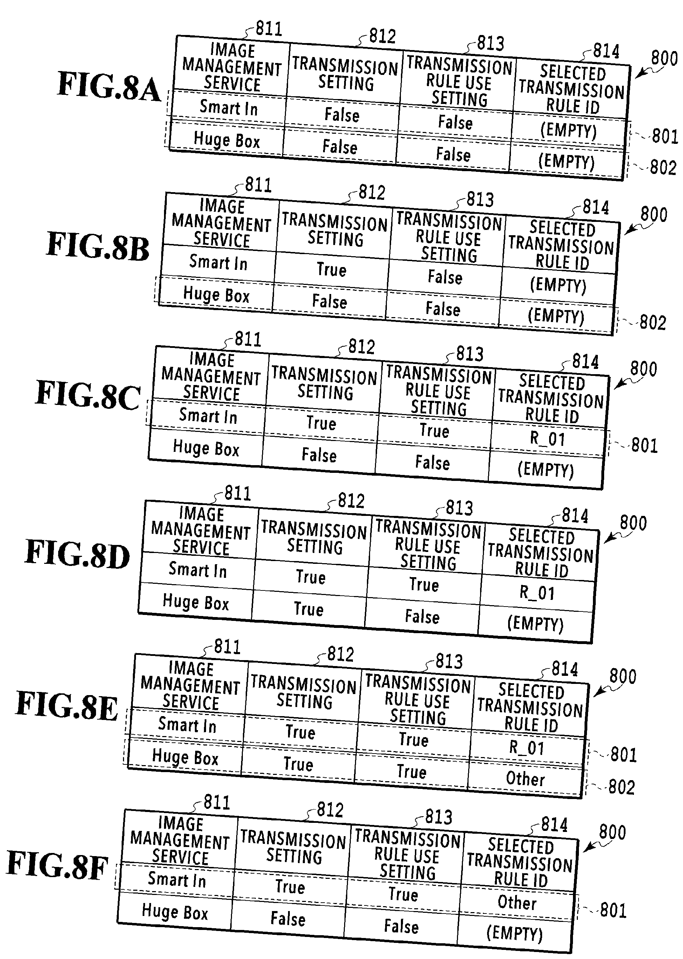

Figs. 8A to 8F are diagrams illustrating a transmission setting management table 800 for managing, for each image management service, the content that is set to the image management service. The transmission setting management table 800 is stored in the storage unit 112. The transmission setting management table 800 includes a column 811 that holds the name of the image management service, a column 812 that holds the Boolean value of transmission setting, a column 813 that holds the Boolean value of transmission rule use setting, and a column 814 that holds the value of a selected transmission rule ID.

In the transmission setting management table 800, a row (record) is generated for each image management service that has been already linked to the image management apparatus 101. For example, it is assumed that the user has accounts for the image management service the name of which is "Smart In" and the image management service the name of which is "Huge Box", and has performed the processing of linking each of the image management services to the image management apparatus 101. In this case, the transmission setting management table 800 including a row 801 in which "Smart In" is included in the column 811 and a row 802 in which "Huge Box" is included in the column 811 is stored.

The value of transmission setting held in the column 812 will be described. A transmission setting "True" indicates the setting of automatically transmitting images to a target image management service. A transmission setting "False" indicates the setting of not automatically transmitting images to the target image management service.

The value of transmission rule use setting held in the column 813 will be described. A transmission rule use setting "True" indicates the setting of automatically transmitting images to an image management service by using a transmission rule. A transmission rule use setting "False" indicates the setting of transmitting all images managed in the image management table 320 to an image management service, without using a transmission rule.

In a case where the transmission rule use setting is "True", the value of the transmission rule ID (called the selected transmission rule ID) indicating the transmission rule to be used is held in the column 814.

Fig. 8A is a diagram illustrating the transmission setting management table 800 after being linked to the image management services. It is assumed that the initial values of the transmission setting and the transmission rule use setting are "False."

First, a method of changing the values of the transmission setting and the transmission rule use setting will be described. In S202 in Fig. 2, if the computation unit 113 determines that an instruction for associating a transmission rule with an image management service is received from the terminal 102 of the user, the processing proceeds to S207.

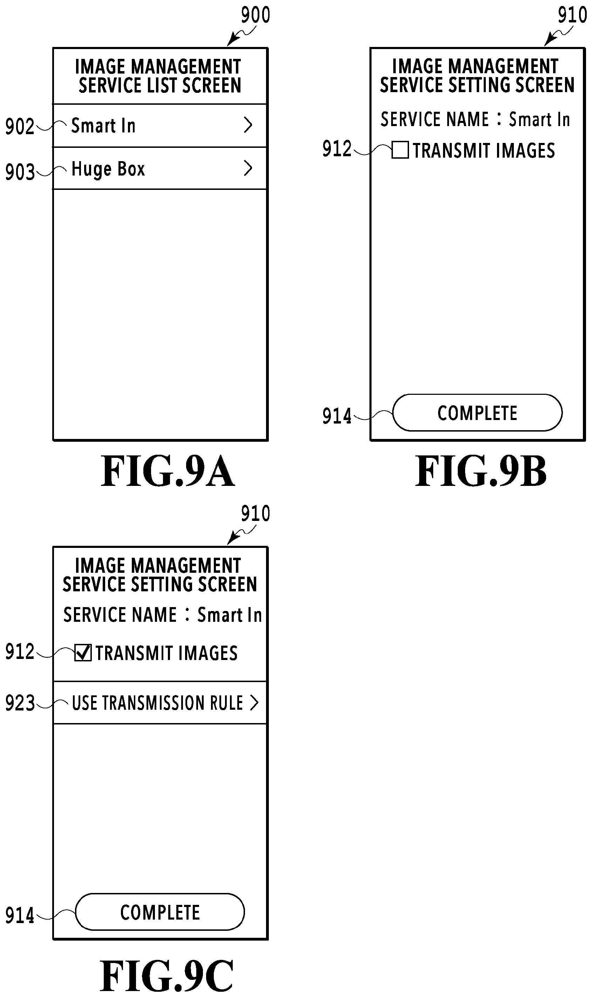

In S207 in Fig. 2, the display control unit 122 displays an image management service list screen 900 (refer to Fig. 9A) on the terminal 102.

Fig. 9A is a diagram illustrating an example of the image management service list screen 900. The image management service list screen 900 includes buttons 902 and 903 corresponding to "Smart In" and "Huge Box", which are the image management services that have been already linked to the image management apparatus 101. The button 902 is a button for starting the setting of "Smart In", and in a case where the button 902 is pressed, the terminal 102 transmits that "Smart In" has been selected to the image management apparatus 101. The button 903 is a button for starting the setting of "Huge Box." In a case where the button 903 is pressed, the terminal 102 transmits that "Huge Box" has been selected to the image management apparatus 101.

In S208 in Fig. 2, if an image management service is selected from the image management service list screen 900, the display control unit 122 displays, on the terminal 102, an image management service setting screen 910 (refer to Figs. 9B and 9C) corresponding to the selected image management service.

Fig. 9B is a diagram illustrating an example of the image management service setting screen 910 in a case where the button 902 of the image management service list screen 900 is pressed, and the setting unit 124 receives a designation instruction of "Smart In", which is the image management service.

A check box 912 included in the image management service setting screen 910 is a check box for setting automatic transmission of images to the selected target image management service to be enabled or disabled. A complete button 914 is a button for completing the setting of the target image management service.

In S209 in Fig. 2, an instruction by the user via the image management service setting screen 910 is acquired.

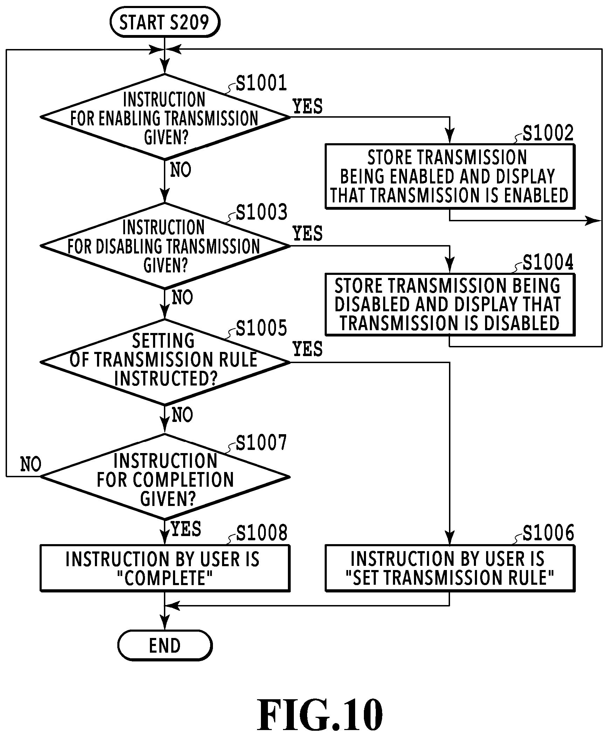

Fig. 10 is a flowchart for describing the acquisition processing of the instruction by the user to be performed by the image management apparatus 101 in S209. The processing illustrated in Fig. 10 is realized by the computation unit 113 of the image management apparatus 101 executing the program stored in the storage unit 112. A part or all of the functions of the steps in Fig. 10 may be realized by hardware, such as an ASIC or an electronic circuit. A description will be given by assuming that the target image management service selected by the user in the image management service list screen 900 is "Smart In."

In S1001, the setting unit 124 determines whether or not an instruction for enabling automatic transmission of images has been received from the terminal 102. If the check box 912 in the image management service setting screen 910 is in a selected state, the terminal 102 transmits, to the image management apparatus 101, the instruction for enabling automatic transmission of images. If the setting unit 124 determines that the instruction for enabling automatic transmission of images has been given (YES in S1001), the processing proceeds to S1002.

In S1002, the display control unit 122 displays, on the terminal 102, the image management service setting screen 910 in which the check box 912 is in the selected state and a transmission rule setting button 923 is displayed as illustrated in Fig. 9C. The management unit 121 stores the transmission setting management table 800 in which the transmission enabled value associated with the identifier "Smart In" of the target image management service has been changed to "True." As a result, the transmission setting management table 800 is in the state illustrated in Fig. 8B. Then, the management unit 121 returns the processing to S1001. If the management unit 121 determines that the instruction for enabling automatic transmission of images has not been received (NO in S1001), the processing proceeds to S1003.

In S1003, the setting unit 124 determines whether or not an instruction for disabling automatic transmission of images has been received from the terminal 102. If the user performs an operation of canceling the selected state of the check box 912 in the image management service setting screen 910, the terminal 102 transmits the instruction for disabling automatic transmission of images to the image management apparatus 101. If the setting unit 124 determines that the instruction for disabling automatic transmission of images has been given (YES in S1003), the processing proceeds to S1004.

In S1004, the display control unit 122 displays, on the terminal 102, the image management service setting screen 910 in which the check box 912 is in a non-selected state and the transmission rule setting button 923 is not displayed as illustrated in Fig. 9B. The management unit 121 stores the transmission setting management table 800 in which the transmission enabled value associated with the identifier "Smart In" of the target image management service has been changed to "False." As a result, the transmission setting management table 800 is in the state illustrated in Fig. 8A. Then, the management unit 121 returns the processing to S1001. If the management unit 121 determines that the instruction for disabling automatic transmission of images has not been received (NO in S1003), the processing proceeds to S1005.

In S1005, the setting unit 124 determines whether or not an instruction of transmission rule setting has been received from the terminal 102. If the transmission rule setting button 923 in the image management service setting screen 910 is pressed, the terminal 102 transmits the instruction of transmission rule setting to the image management apparatus 101. If the setting unit 124 determines that the instruction of transmission rule setting has been received (YES in S1005), the processing proceeds to S1006.

In S1006, the setting unit 124 identifies that the instruction by the user is "set transmission rule." Then, the flowchart in Fig. 10 ends, and the processing proceeds to S210 in Fig. 2. If the setting unit 124 determines that the instruction of transmission rule use has not been received (NO in S1005), the processing proceeds to S1007.

In S1007, the setting unit 124 determines whether or not an instruction of setting completion of the image management service has been received from the terminal 102. If the complete button 914 in the image management service setting screen 910 is pressed, the terminal 102 transmits the instruction of setting completion of the image management service to the image management apparatus 101. If the setting unit 124 determines that the instruction of setting completion of the image management service has been received (YES in S1007), the processing proceeds to S1008.

In S1008, the setting unit 124 identifies that the instruction by the user is "complete." Then, the flowchart in Fig. 10 ends, and the processing proceeds to S210 in Fig. 2. If the management unit 121 determines that the instruction of setting completion of the image management service has not been received (NO in S1007), the processing returns to S1001.

In S210 in Fig. 2, the display control unit 122 determines whether the instruction by the user via the image management service setting screen 910 is "complete" or "set transmission rule." If the display control unit 122 determines that the instruction by the user is "complete", the processing returns to S207. Then, the display control unit 122 ends displaying of the image management service setting screen 910, and displays the image management service list screen 900 in Fig. 9A on the terminal 102.

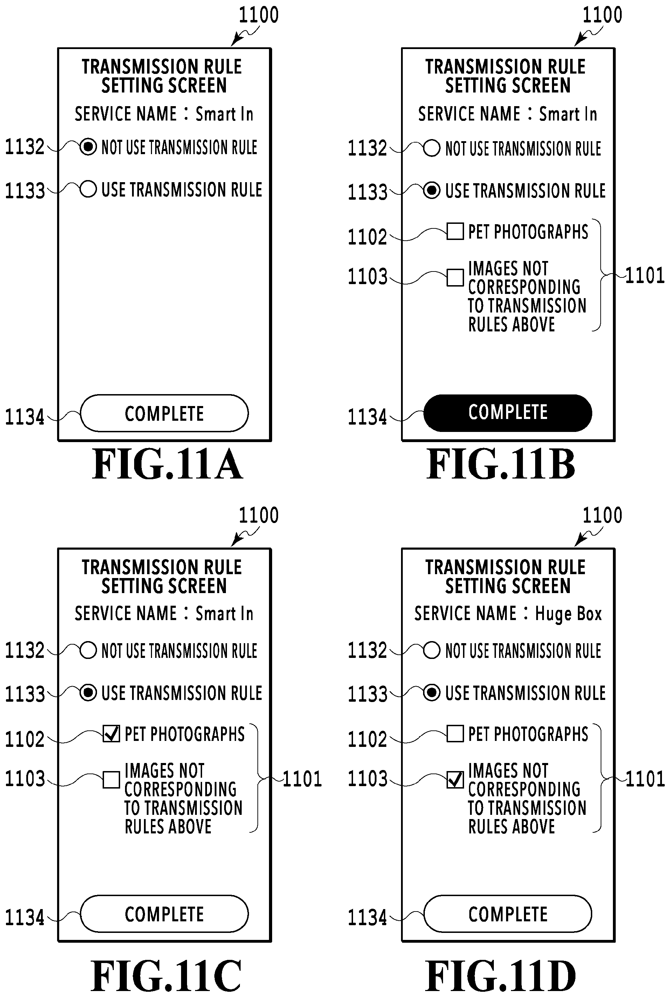

In S210 in Fig. 2, if the display control unit 122 determines that the instruction by the user is "set transmission rule", the processing proceeds to S211. In S211, the display control unit 122 displays a transmission rule setting screen 1100 (refer to Figs. 11A to 11D) on the terminal 102.

It should be noted that if the check box 912 is in the selected state and the transmission setting is enabled (YES in S1001), the processing may transition to S1006, and the transmission rule setting screen 1100 (refer to Figs. 11A to 11D) may be displayed on the terminal 102.

### [Processing of Designating Transmission Rule to be used for Transmission of Image Management Service]

Figs. 11A to 11D are diagrams illustrating an example of the transmission rule setting screen. Fig. 11A is an example of the transmission rule setting screen 1100 displayed in S211 after the transmission rule setting button 923 in the image management service setting screen 910 in Fig. 9C is pressed.

A first radio button 1132 is a radio button for instructing disablement of use of a transmission rule. A second radio button 1133 is a radio button for instructing enablement of use of a transmission rule. The screen is controlled such that if one of the first radio button 1132 and the second radio button 1133 is in a selected state, the other is in a non-selected state.

A complete button 1134 is a button for instructing completion of setting in the transmission rule setting screen 1100. In the transmission rule setting screen 1100 illustrated in Fig. 11A displayed in S211, the complete button 1134 is displayed in a state (called an enabled state) where the complete button 1134 can be pressed by the user.

If the transmission rule setting screen 1100 in Fig. 11A is displayed in S211 in Fig. 2, the processing proceeds to S212. In S212, the processing according to the operation by the user on the transmission rule setting screen 1100 is performed, and the processing of associating the target image management service with the transmission rule selected by the user is performed.

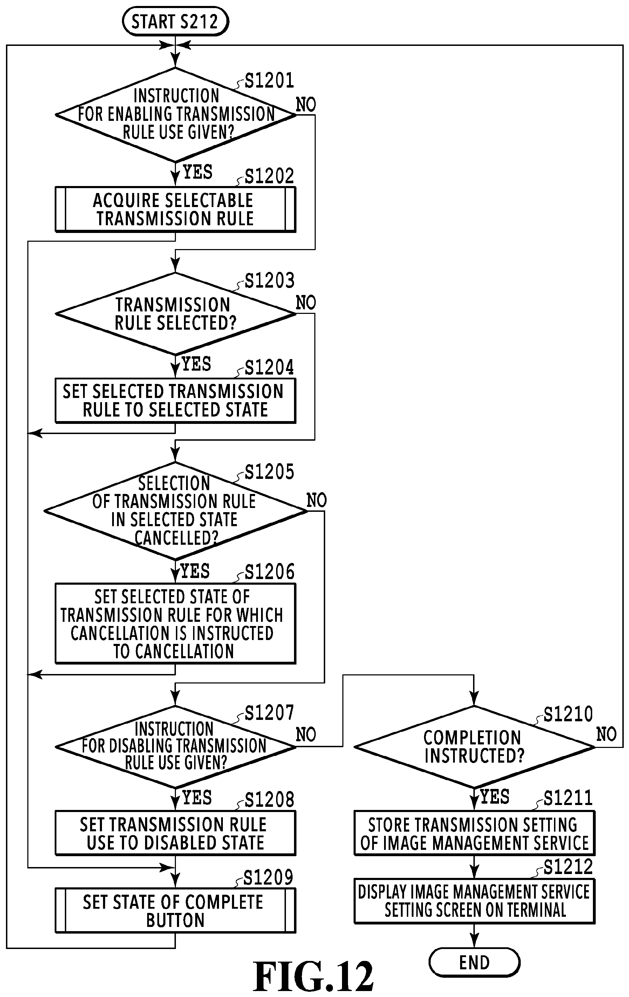

FIG. 12 is a flowchart for describing the details of the processing to be performed by the image management apparatus 101 in S212. The processing illustrated in FIG. 12 is realized the computation unit 113 of the image management apparatus 101 executing the program stored in the storage unit 112. A part or all of the functions of the steps in Fig. 12 may be realized by hardware, such as an ASIC or an electronic circuit.

In S1201, the setting unit 124 determines whether or not an instruction for enabling transmission rule use has been received from the terminal 102. If the second radio button 1133 in the transmission rule setting screen 1100 in Figs. 11A to 11D is pressed by the user, the terminal 102 transmits an instruction for enabling transmission rule use to the image management apparatus 101. If the setting unit 124 of the image management apparatus 101 determines that the instruction for enabling transmission rule use has been received (YES in S1201), the processing proceeds to S1202. In S1202 and S1209, the display control unit 122 performs the processing of updating the transmission rule setting screen 1100.

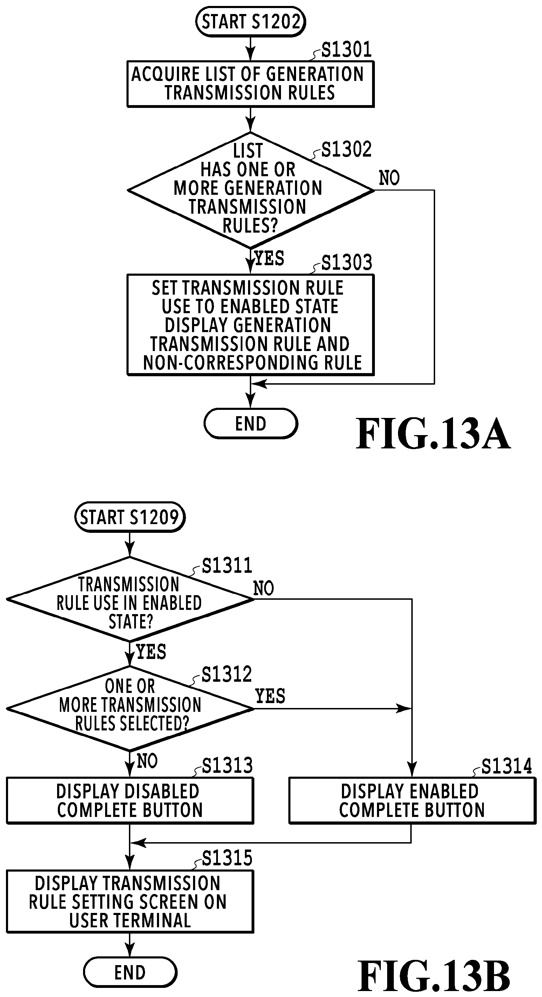

Fig. 13A is a flowchart illustrating the details of the processing in S1202. The processing illustrated in Fig. 13A is realized by the computation unit 113 of the image management apparatus 101 executing the program stored in the storage unit 112. A part or all of the functions of the steps in Fig. 13A may be realized by hardware, such as an ASIC or an electronic circuit.

In S1301, the display control unit 122 acquires the generation transmission rule management table 400 managed by the management unit 121.

In S1302, the display control unit 122 determines whether or not there is one or more generation transmission rules in the generation transmission rule management table 400 acquired in S1301. If it is determined that there is one or more generation transmission rules (YES in S1302), the processing proceeds to S1303. If there is no generation transmission rule (NO in S1302), the flowchart ends.

In S1303, the display control unit 122 performs setting so that the second radio button 1133 in the transmission rule setting screen 1100 is in the selected state and the first radio button 1132 is in the non-selected state. In addition, the display control unit 122 performs setting so that transmission rule list 1101 including a region for selecting the generation transmission rule included in the generation transmission rule management table 400 and the aforementioned non-corresponding rule is included in the transmission rule setting screen 1100. The non-corresponding rule is a transmission rule for instructing transmission of images that do not match the generation transmission rule. Then, the flowchart ends, and the processing proceeds to S1209 in FIG. 12.

In S1209, the display control unit 122 determines the state of the complete button 1134, and displays, on the terminal 102, the transmission rule setting screen 1100 to which the settings from the previous steps are reflected.

Fig. 13B is a flowchart for describing the details of S1209. The processing illustrated in Fig. 13B is realized by the computation unit 113 of the image management apparatus 101 executing the program stored in the storage unit 112. A part or all of the functions of the steps in Fig. 13B may be realized by hardware, such as an ASIC or an electronic circuit.

In S1311, the display control unit 122 determines whether or not an instruction for enabling transmission rule use is given. If the instruction for enabling transmission rule use is given (YES in S1311), the processing proceeds to S1312. If the instruction for enabling transmission rule use is not given (NO in S1311), the processing proceeds to S1314.

In S1312, the display control unit 122 determines whether or not one or more transmission rules (generation transmission rules or the non-corresponding rule) are selected from the transmission rule list 1101 in the transmission rule setting screen 1100. If one or more transmission rules are selected (YES in S1312), the processing proceeds to S1314. If the transmission rule is not selected (NO in S1312), the processing proceeds to S1313.

In S1313, the display control unit 122 sets the complete button 1134 to a disabled state, so that even if the complete button 1134 in the transmission rule setting screen 1100 is pressed, it is not accepted.

In S1314, the display control unit 122 sets the complete button 1134 in the transmission rule setting screen 1100 to an enabled state.

In S1315, the display control unit 122 displays, on the terminal 102, the transmission rule setting screen 1100 with the contents that have been set in the previous steps. Then, the flowchart ends, and the processing returns to S1201 in FIG. 12.

The transmission rule setting screen 1100 that is displayed as a result of transition to S1202, S1209 includes check boxes 1102 and 1103 for selecting transmission rules as illustrated in Fig. 11B. As described above, in the present embodiment, since the non-corresponding rule is automatically included in transmission rules, the check box 1103 for selecting the non-corresponding rule is included. In addition, the complete button 1134 is displayed in the disabled state. In Fig. 11B, the black complete button 1134 indicates the complete button in the disabled state, and the white complete button 1134 indicates the complete button in the enabled state.

On the other hand, if the setting unit 124 determines that the instruction for enabling transmission rule use has not been received (NO in S1201), the processing proceeds to S1203.

In S1203, the setting unit 124 determines whether or not the selection of the transmission rule has been received from the terminal 102. If the transmission rule list 1101 is included in the transmission rule setting screen 1100, and either one of the check boxes 1102 and 1103 is in the selected state, the terminal 102 transmits the selected transmission rule to the image management apparatus 101. If the setting unit 124 determines that the selection of the transmission rule has been received (YES in S1203), the processing proceeds to S1204. If the setting unit 124 determines that the selection of the transmission rule has not been received (NO in S1203), the processing proceeds to S1205.

In S1204, the display control unit 122 sets the check box of the check boxes 1102 and 1103 included in the transmission rule setting screen 1100 that is pressed by the user to the selected state, and the processing proceeds to S1209.

In the flowchart in Fig. 13B, which is performed if transition is made from S1204 to S1209, transition is made to S1314, and the display control unit 122 sets the complete button 1134 to the enabled state. Then, in S1315, the display control unit 122 displays, on the terminal 102, the transmission rule setting screen 1100 with the contents that have been set in the previous steps. Then, the processing returns to S1201 in FIG. 12.

In S1205, the setting unit 124 determines whether or not the cancellation of the selected state of the transmission rule has been received from the terminal 102. If the selected state of the check box 1102, 1103 in the transmission rule setting screen 1100 is cancelled, the terminal 102 transmits, to the image management apparatus 101, the transmission rule of which the selected state has been canceled. If the setting unit 124 determines that the cancellation of the selected state of the transmission rule has been received (YES in S1205), the processing proceeds to S1206. If the setting unit 124 determines that the cancellation of the selected state of the transmission rule has not been received (NO in S1205), the processing proceeds to S1207.

In S1206, the display control unit 122 performs setting of canceling the selected state of the check box of the check boxes in the selected state included in the transmission rule setting screen 1100 that is pressed by the user, and the processing proceeds to S1209.

In the flowchart in Fig. 13B, which is performed if transition is made from S1206 to S1209, if all of the selected states of the check boxes 1102 and 1103 are canceled, since it is determined to be NO in S1312, transition is made to S1313. In S1313, the complete button 1134 is set to the disabled state. If there are the check boxes 1102 and 1103 in the selected states, since it is determined to be YES in S1312, transition is made to S1314, and the complete button 1134 is set to the enabled state. In S1315, the display control unit 122 displays, on the terminal 102, the transmission rule setting screen 1100 with the contents that have been set in the previous steps. Then, the processing returns to S1201 in FIG. 12.

In S1207, the setting unit 124 determines whether or not the instruction for disabling transmission rule use has been received from the terminal 102. If the first radio button 1132 in the transmission rule setting screen 1100 in Figs. 11A to 11D is pressed, the terminal 102 transmits the instruction for disabling transmission rule use to the image management apparatus 101. If the setting unit 124 of the image management apparatus 101 determines that the instruction for disabling transmission rule use has been received (YES in S1207), the processing proceeds to S1208. If the setting unit 124 determines that the instruction for disabling transmission rule use has not been received (NO in S1207), the processing proceeds to S1210.

In S1208, the display control unit 122 sets the first radio button 1132 included in the transmission rule setting screen 1100 to the selected state, and performs setting of not including the transmission rule list 1101, and the processing proceeds to S1209.

In the flowchart in Fig. 13B, which is performed if transition is made from S1208 to S1209, since the transmission rule use is selected to be disabled, S1311 is determined to be NO, and thus transition is made to S1314, and the complete button 1134 is set to the enabled state. Then, in S1315, the display control unit 122 displays, on the terminal 102, the transmission rule setting screen 1100 with the contents that have been set in the previous steps. Then, the processing returns to S1201 in FIG. 12.

For example, if the first radio button 1132 is pressed, the display control unit 122 displays, on the terminal 102, the transmission rule setting screen 1100 as in Fig. 11A in which the first radio button 1132 is in the selected state, and the complete button 1134 is in the enabled state.

In S1210, the setting unit 124 determines whether or not the instruction for completing the designation of the transmission rule has been received from the terminal 102. If the complete button 1134 in the enabled state in the transmission rule setting screen 1100 in Fig. 11A is pressed, the terminal 102 transmits the instruction for completing the designation of the transmission rule to the image management apparatus 101. If the setting unit 124 of the image management apparatus 101 determines that the instruction for completing the designation of the transmission rule has been received (YES in S1210), the processing proceeds to S1211. If the setting unit 124 determines that the instruction for completing the designation of the transmission rule has not been received (NO in S1210), the processing returns to S1201.

In S1211, the management unit 121 updates the value of transmission rule use setting and the value of the selected transmission rule ID that are associated with the target image management service in the transmission setting management table 800 with the contents of the transmission rule setting screen 1100.

For example, assume that the complete button 1134 is pressed with the second radio button 1133 in the transmission rule setting screen 1100 in Fig. 11C or 11D being in the selected state. In this case, the management unit 121 holds "True" as the setting value of the transmission rule use setting in the column 813 associated with the identifier of the target image management service in the transmission setting management table 800 in Figs. 8A to 8F. If the complete button 1134 is pressed with the first radio button 1132 being in the selected state, "False" is held as the value of the transmission rule use setting in the column 813 associated with the identifier of the target image management service in the transmission setting management table 800. If the value of the transmission rule use setting is "False", an "empty" value is held in the selected transmission rule ID in the column 814 in the transmission setting management table 800.

Assume that the complete button 1134 is pressed with either one of the check boxes 1102 and 1103 in the transmission rule setting screen 1100 being in the selected state. In this case, the management unit 121 holds the value of the transmission rule ID of the transmission rule corresponding to the check box in the selected state in the column 814 associated with the identifier of the target image management service in the transmission setting management table 800.

In S1212, the display control unit 122 ends displaying of the transmission rule setting screen 1100, and displays the image management service setting screen 910 on the terminal 102, and the flowchart ends.

### (Flow of Processing of Associating Generation Transmission Rule with Image Management Service)

A description will be given of the flow of processing in a case where the generation transmission rule management table 400 in Fig. 4 is stored, and the generation transmission rule having a transmission rule ID of "R_01" is associated with the image management service Smart In "."

The user presses the button 902 in the image management service list screen 900 in Fig. 9A displayed in S207 in Fig. 2, so as to select "Smart In" as the target image management service. As a result, in S208, the display control unit 122 displays, on the terminal 102, the image management service setting screen 910 illustrated in Fig. 9B corresponding to "Smart In." The user presses the check box 912 and the transmission rule setting button 923 in the image management service setting screen 910. As a result, the processing in the image management apparatus 101 transitions to S211 in Fig. 2, and the display control unit 122 displays the transmission rule setting screen 1100 in Fig. 11A for setting "Smart In" on the terminal 102.

The user presses the second radio button 1133 in the transmission rule setting screen 1100 in Fig. 11A, in order to enable transmission rule use. As a result, the processing in S212 in Fig. 2 is performed in the image management apparatus 101. In the flowchart in FIG. 12, which illustrates the details of S212, the setting unit 124 determines YES in S1201, and the processing transitions to S1202. In Fig. 13A, which illustrates the details of S1202, since there is the generation transmission rule as illustrated in Fig. 4, the setting unit 124 determines YES in S1302, and the display control unit 122 performs setting of displaying the transmission rule list 1101 in S1303.

Then, if the processing transitions from S1202 to S1209, in S1311 in Fig. 13B, which illustrates the details of S1209, since the display control unit 122 determines that the instruction for enabling transmission rule use has been given (YES in S1311), the processing transitions to S1312. Since the transmission rule has not been selected yet in the transmission rule setting screen 1100 in Fig. 11A, the display control unit 122 determines NO in S1312, the processing transitions to S1313, and the display control unit 122 sets the complete button 1134 to the disabled state.

As a result, in S1315, the display control unit 122 displays, on the terminal 102, the transmission rule setting screen 1100 in Fig. 11B in which the second radio button 1133 is in the selected state, the transmission rule list 1101 is included, and the complete button 1134 is disabled. The check box 1102 in the transmission rule list 1101 is a check box for selecting the generation transmission rule having a transmission rule ID of "R_01."

The user presses the check box 1102 in the transmission rule setting screen 1100 in Fig. 11B, in order to associate the generation transmission rule with the target image management service. In this case, in the processing of the image management apparatus 101, the setting unit 124 determines NO in S1201, and determines YES in S1203, the processing transitions to S1204, and in S1204, the display control unit 122 sets the check box 1102 to the selected state.

Then, if the processing transitions from S1204 to S1209, in S1311 in Fig. 13B, since the display control unit 122 determines that the instruction for enabling the transmission rule has been given (YES in S1311), the processing transitions to S1312. Since the user has selected the transmission rule, the display control unit 122 determines YES in S1312, the processing transitions to S1314, and the complete button 1134 is set to the enabled state.

As a result, in S1315, the display control unit 122 displays, on the terminal 102, the transmission rule setting screen 1100 as in Fig. 11C in which the check box 1102 of the transmission rule list 1101 is in the selected state and the complete button 1134 is enabled.

If the user presses the complete button 1134 in the transmission rule setting screen 1100 in the state in Fig. 11C, as the processing in the image management apparatus 101, the processing transitions to S1210 in Fig. 12, it is determined YES in S1210, and the processing transitions to S1211.

In S1211, the management unit 121 holds "True" in the column 813 of the row 801 that holds the transmission rule use setting associated with the target image management service "Smart In" in the transmission setting management table 800. In addition, "R_01", which indicates the selected generation transmission rule, is held in the column 814 of the selected transmission rule ID associated with the image management service "Smart In." As a result, the transmission setting management table 800 stored in the storage unit 112 becomes as illustrated in Fig. 8D.

### (Flow of Processing of Associating Non-corresponding Rule with Image Management Service)

A description will be given of the flow of processing in a case of associating a non-corresponding rule with the image management service "Huge Box." A description will be given by assuming that, as an example, the value of the transmission rule ID of the non-corresponding rule is "Other." It is assumed that the generation transmission rule management table 400 in Fig. 4 is stored, and the transmission setting management table 800 illustrated in Fig. 8D is stored.

The user presses the button 903 in the image management service list screen 900 in Fig. 9A displayed in S207 in Fig. 2, so as to select "Huge Box" as the target image management service. As a result, in S208, the display control unit 122 displays the image management service setting screen 910 corresponding to "Huge Box." The user presses the check box 912 and the transmission rule setting button 923 in the image management service setting screen 910. As a result, the processing in the image management apparatus 101 transitions to S211 in Fig. 2, and the display control unit 122 displays the transmission rule setting screen 1100 for setting "Huge Box" on the terminal 102.

The user presses the second radio button 1133 in the transmission rule setting screen 1100, in order to enable the transmission rule use. As a result, the processing in S212 in Fig. 2 is performed in the image management apparatus 101. Since the flow of the processing is the same as that in "Flow of Processing of Associating Generation Transmission Rule with Image Management Service", a description thereof will be omitted.

In order to associate the non-corresponding rule with the target image management service "Huge Box", the user presses the check box 1103 for selecting the non-corresponding rule in the transmission rule setting screen 1100. In this case, in the processing in the image management apparatus 101, the setting unit 124 determines NO in S1201 and determines YES in S1203, the processing transitions to S1204, and the display control unit 122 sets the check box 1103 to the selected state in S1204.

Then, if the processing transitions from S1204 to S1209, in S1311 of Fig. 13B, since the display control unit 122 determines that the instruction for enabling the transmission rule has been given (YES in S1311), the processing transitions to S1312. Since the user has selected the transmission rule, the display control unit 122 determines YES in S1312, the processing transitions to S1314, and the display controller sets the complete button 1134 to the enabled state. As a result, in S1315, the display control unit 122 displays, on the terminal 102, the transmission rule setting screen 1100 as in Fig. 11D in which the check box 1103 in the transmission rule list 1101 is in the selected state and the complete button 1134 is enabled.

If the user presses the complete button 1134 in the transmission rule setting screen 1100 in the state in Fig. 11D, as the processing in the image management apparatus 101, the processing transitions to S1210 in Fig. 12, and it is determined YES in S1210, and the processing transitions to S1211.

In S1211, the management unit 121 holds "True" in the column 813 of the row 802 that holds the transmission rule use setting associated with the target image management service "Huge Box" in the transmission setting management table 800. In addition, "Other", which indicates the selected non-corresponding rule, is held in the column 814 of the selected transmission rule ID associated with the image management service "Huge Box." As a result, the transmission setting management table 800 stored in the storage unit 112 becomes as illustrated in Fig. 8E.

### [Transmission Processing of Images]

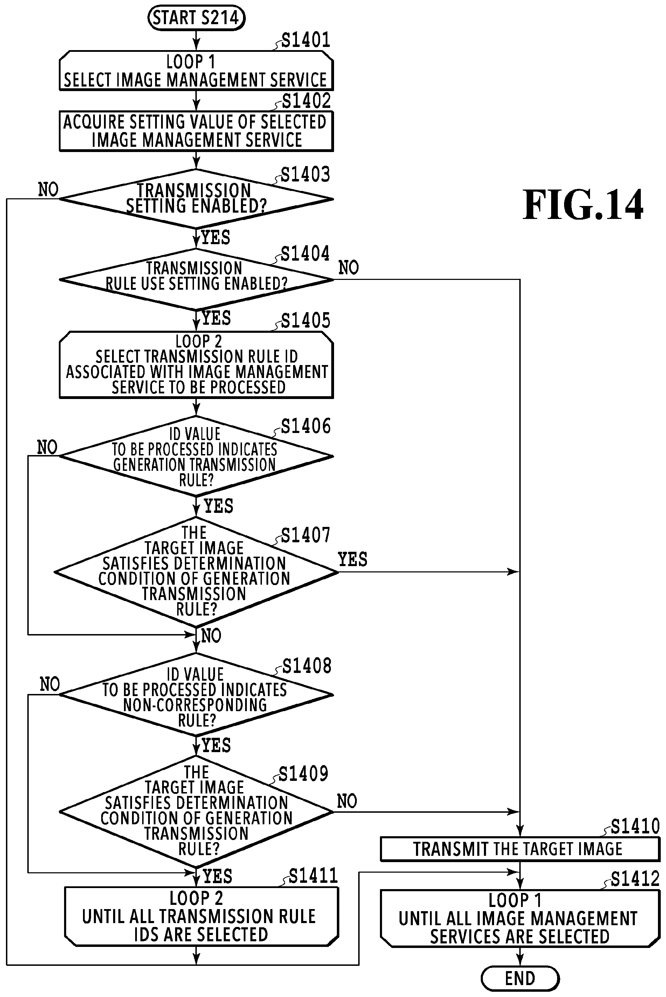

Fig. 14 is a flowchart for describing the image transmission processing to be performed in the image management apparatus 101 in S214. The processing illustrated in Fig. 14 is realized by the computation unit 113 of the image management apparatus 101 executing the program stored in the storage unit 112. A part or all of the functions of the steps in Fig. 14 may be realized by hardware, such as an ASIC or an electronic circuit.

In the description of the flowchart in Fig. 14, it is assumed that the management unit 121 stores the generation transmission rule management table 400 illustrated in Fig. 4. In addition, it is assumed that the transmission setting management table 800 illustrated in Fig. 8E is stored. Furthermore, it is assumed that the information of images managed by the management unit 121 is as in the image management table 320 illustrated in Fig. 3.

### (Flow of Processing of Transmitting Images That Match Generation Transmission Rule)

The processing of the flowchart in Fig. 14 is performed on a target image. First, a description will be given by assuming that the target image is an image having an image ID of "IMG_101."

S1401 to S1412 constitute first loop processing. In S1401, the transmission control unit 123 selects the image management service of the transmission destination of the image from the linked image management services. Then, the transmission control unit 123 performs the processing of S1402 to S1411 on the image management service of the transmission destination. If it is determined in S1412 that there are image management services that have not been selected, the processing returns to S1401, an image management service of the transmission destination is selected from the unselected image management services, and the processing of S1402 to S1411 is repeated. In the present embodiment, it is assumed that the transmission destination is selected from "Smart In" and "Huge Box", which are the linked image management services. First, a description will be given by assuming that "Smart In" has been selected as the image management service of the transmission destination.

In S1402, the transmission control unit 123 acquires the value associated with the image management service of the transmission destination, from the transmission setting management table 800 managed by the management unit 121.

If "Smart In" is selected as the transmission destination, the transmission control unit 123 acquires the value associated with the image management service "Smart In" of the transmission destination, from the row 801 of the transmission setting management table 800 in Fig. 8E.

In S1403, the transmission control unit 123 determines whether or not the value of the transmission setting associated with the image management service of the transmission destination is "True", which indicates that the transmission setting is enabled. If the transmission control unit 123 determines that the transmission setting is "True" (YES in S1403), the processing proceeds to S1404. If the transmission control unit 123 determines that the transmission setting is "False" (NO in S1403), since the image is not transmitted to the image management service of the transmission destination, the processing proceeds to S1412.

For the image management service "Smart In", as illustrated in Fig. 8E, the value of the transmission setting associated with "Smart In", which is held in the column 812 of the row 801, is "True." Therefore, the transmission control unit 123 determines that the transmission setting is "True", and the processing proceeds to S1404.

In S1404, the transmission control unit 123 determines whether or not the value of the transmission rule use setting associated with the image management service of the transmission destination is "True", which indicates being enabled. If the transmission control unit 123 determines that the transmission rule use setting is "True" (YES in S1404), the processing proceeds to S1405. If the transmission control unit 123 determines that the transmission rule use setting is "False" (NO in S1404), since it is the setting of transmitting all images, the processing proceeds to S1410, and the target image is transmitted to the image management service of the transmission destination.

For "Smart In", as illustrated in Fig. 8E, the value of the transmission rule use setting associated with "Smart In", which is held in the column 813 of the row 801, is "True." Therefore, the transmission control unit 123 determines that the transmission rule use setting is enabled, and the processing proceeds to S1405.

S1405 to S1411 constitute second loop processing. In S1405, the transmission control unit 123 selects an ID value to be processed from the values of the selected transmission rule IDs associated with the image management service of the transmission destination. Then, the processing from S1406 to S1410 is performed on the ID value to be processed. In S1411, if it is determined that there are values of the selected transmission rule IDs that have not been selected, the processing returns to S1405, an ID value to be processed is selected from the values of the selected transmission rule IDs that have not been selected, and the processing in S1406 of S1410 is repeated.

For "Smartin", as illustrated in Fig. 8E, the value of the selected transmission rule ID associated with "Smartin", which is held in the column 814 of the row 801, is "R_01." Therefore, the transmission control unit 123 selects "R_01" as the ID value to be processed.

In S1406, the transmission control unit 123 determines whether the ID value to be processed indicates a generation transmission rule. If the transmission control unit 123 determines that the generation transmission rule is indicated (YES in S1406), the processing proceeds to S1407. If the transmission control unit 123 determines that the generation transmission rule is not indicated (NO in S1406), the processing proceeds to S1408.

In S1407, the transmission control unit 123 determines whether or not the target image matches the generation transmission rule indicated by the ID value to be processed. If the transmission control unit 123 determines that the target image satisfies the determination condition of the generation transmission rule (YES in S1407), the processing proceeds to S1410. If the transmission control unit 123 determines that the target image does not satisfy the determination condition of the generation transmission rule (NO in S1407), the processing proceeds to S1408.

The processing of determining whether the target image matches the transmission rule will be described. First, the transmission control unit 123 acquires the value of the object category, which is the determination condition associated with the generation transmission rule, in the generation transmission rule management table 400. Next, the transmission control unit 123 acquires the value of the object category associated with the value of the image ID of the target image in the image management table 320. Then, the transmission control unit 123 determines whether or not the value of the object category of the target image is included in the value of the object category of the transmission rule. For example, if the object category of the target image is equal to the object category of the generation transmission rule, the transmission control unit 123 determines that the target image matches the generation transmission rule indicated by the ID value to be processed.

If an ID value to be processed is "R_01", "R_01" is held in the generation transmission rule management table 400 in Fig. 4. Therefore, the transmission control unit 123 determines that the transmission rule indicated by "R_01", which is the ID value to be processed, is the generation transmission rule (YES in S1406). Next, the transmission control unit 123 acquires, from Fig. 4, "animal", which is the determination condition associated with "R_01" that is the ID value to be processed. In addition, if the image ID of the target image is "IMG_101", the transmission control unit 123 acquires "animal", which is the value of the object category associated with the image ID "IMG_101", from the image management table 320 in Fig. 3. The value of the object category indicated by the determination condition and the value of the object category of the target image are the same "animal." Therefore, the transmission control unit 123 determines that the target image matches the transmission rule (YES in S1407), the processing proceeds to S1410.

In S1410, the transmission control unit 123 transmits the target image to the image management service of the transmission destination. Then, the processing proceeds to S1412.

If the image management service of the transmission destination is "Smart In", the transmission control unit 123 transmits the target image having an image ID of "IMG_101" to the image management service "Smart In."

In S1412, since the transmission control unit 123 has not completed the processing for all the image management services, the processing returns to S1401.

In S1401, the transmission control unit 123 selects an unselected "Huge Box" from the linked image management services as the transmission destination, and repeats the processing of S1402 to S1411. Hereinafter, the description of the steps that have already been described will be omitted.

In S1402, the transmission control unit 123 acquires the value associated with the image management service "Huge Box" of the transmission destination from the transmission setting management table 800 in Fig. 8E.

As illustrated in Fig. 8E, the value of the transmission setting associated with "Huge Box", which is held in the column 812 of the row 802, is "True." Therefore, in S1403, the transmission control unit 123 determines that the transmission setting is enabled, and the processing proceeds to S1404.

As illustrated in Fig. 8E, the value of the transmission rule use setting associated with "Huge Box", which is held in the column 813 of the row 802, is "True." Therefore, in S1404, the transmission control unit 123 determines that the transmission rule use setting is enabled, and the processing proceeds S1405.

In S1405, as illustrated in Fig. 8E, the transmission control unit 123 selects the value "Other" of the selected transmission rule ID associated with "Huge Box", which is held in the column 814 of the row 802, as the ID value to be processed.

In S1406, since the ID value to be processed "Other" is not included in the generation transmission rule management table 400 in Fig. 4, the transmission control unit 123 determines that "Other" is not a generation transmission rule (NO in S1406). Therefore, the transmission control unit 123 advances the processing to S1408.

In S1408, the transmission control unit 123 determines whether the ID value to be processed indicates the non-corresponding rule. If the ID value to be processed is "Other", the transmission control unit 123 determines that the ID value to be processed is the value indicating the non-corresponding rule. If the transmission control unit 123 determines that the ID value to be processed indicates the non-corresponding rule (YES in S1408), the processing proceeds to S1409. If the transmission control unit 123 determines that the ID value to be processed does not indicate the non-corresponding rule (NO in S1408), the processing proceeds to S1411.

In S1409, the transmission control unit 123 determines whether or not the target image matches any of the generation transmission rules included in the generation transmission rule management table 400.

This processing in S1409 is a step for checking whether the target image matches the non-corresponding rule. In order to determine whether the target image matches the non-corresponding rule, the transmission control unit 123 checks that the target image does not match any of the generation transmission rules included in the generation transmission rule management table 400 in Fig. 4. If it is determined that the target image does not match any of the generation transmission rules (NO in S1409), the target image is determined to match the non-corresponding rule.

This target image in this case is determined to match the generation transmission rule having a transmission rule ID of "R_01." Therefore, the transmission control unit 123 determines S1409 to be YES, and the processing proceeds to S1411, without transitioning to S1410. That is, since the target image does not match the non-corresponding rule, it is controlled not to be transmitted to "Huge Box" with which the non-corresponding rule is associated.

In S1411, the transmission control unit 123 determines that the processing has been performed on the values of all the selected transmission rule IDs associated with the image management service of the transmission destination, and the processing proceeds to S1412.

In S1412, the transmission control unit 123 determines that the processing has been performed on all the image management services, and the flowchart ends.

### (Flow of Processing of Transmitting Image That Matches Non-corresponding Rule)

Next, a description will be given of the flowchart in Fig. 14 by assuming that the target image is the image having an image ID of "IMG_102."

In S1401, the transmission control unit 123 selects "Smart In" from the linked image management services "Smart In" and "Huge Box", as the image management service of the transmission destination of the target image.

Since it is determined to be YES in S1403 and S1404 as described above, the processing proceeds to S1405.

In S1405, the transmission control unit 123 selects, as an ID value to be processed, the value "R_01" of the selected transmission rule ID associated with "Smart In."

In S1406, the transmission control unit 123 determines that the ID value to be processed "R_01" indicates a generation transmission rule (YES in S1406), and the processing proceeds to S1407.

In S1407, the transmission control unit 123 acquires "animal", which is the determination condition associated with "R_01" that is the ID value to be processed, from

Fig. 4. In addition, the transmission control unit 123 acquires "landscape", which is the value of the object category associated with the image ID "IMG_102" indicated by the target image, from the image management table 320 in Fig. 3. Since the value of the object category indicated by the determination condition is different from the value of the object category of the target image, the transmission control unit 123 determines that the target image does not match the generation transmission rule (NO in S1407), and the processing proceeds to S1408.

In S1408, the transmission control unit 123 determines that "R_01", which is the ID value to be processed, is not the value indicating the non-corresponding rule (NO in S1408), and the processing proceeds to S1411. That is, the image having an image ID "IMG_102", which is the target image in this case, is controlled not to be transmitted to "Smart In" with which the generation transmission rule is associated.

In S1411, the transmission control unit 123 determines that the processing has been performed on the values of all the selected transmission rule IDs associated with the image management service of the transmission destination, and the processing proceeds to S1412.

In S1412, since the transmission control unit 123 has not completed the processing for all the image management services, the processing returns to S1401.

In S1401, the transmission control unit 123 selects an unselected "Huge Box" from the linked image management services as the transmission destination, and repeats the processing of S1402 to S1411.

In S1402, the transmission control unit 123 acquires the value associated with the image management service "Huge Box" of the transmission destination from the transmission setting management table 800 in Fig. 8E.

Since it is determined to be YES in S1403 and S1404 as described above, the processing proceeds to S1405.

In S1405, as illustrated in Fig. 8E, the transmission control unit 123 selects the value "Other" of the selected transmission rule ID associated with "Huge Box", which is held in the column 814 of the row 802, as the ID value to be processed.

In S1406, the transmission control unit 123 determines that the ID value to be processed "Other" is not a generation transmission rule (NO in S1406), and the processing proceeds to S1408.

In S1408, the transmission control unit 123 determines that "Other", which is the ID value to be processed, is the value indicating the non-corresponding rule (YES in S1408), and the processing proceeds to S1409.

In S1409, in order to determine whether the target image matches the non-corresponding rule, the transmission control unit 123 checks the target image does not match any of the generation transmission rules included in the generation transmission rule management table 400 in Fig. 4.

The generation transmission rule included in the generation transmission rule management table 400 in Fig. 4 is only the generation transmission rule having a transmission rule ID of "R_01." The target image is determined not to match this generation transmission rule. Therefore, the transmission control unit 123 determines that the image having an image ID of "IMG_102", which is the target image, does not match any of the generation transmission rules (NO in S1409). That is, the target image in this case is determined to match the non-corresponding rule. Therefore, the processing transitions to S1410.

In S1410, the transmission control unit 123 transmits the target image having an image ID of "IMG_102" to the image management service "Huge Box" of the transmission destination.

In S1412, the transmission control unit 123 determines that the processing has been performed on all the image management services, and the flowchart ends.

As described above, in the present embodiment, it is possible to display the non-corresponding rule on the screen on which the user selects a transmission rule, and to allow the user to select the non-corresponding rule. Therefore, images that does not match other transmission rules can be sorted out, and the sorted out images can be transmitted. Accordingly, user convenience can be increased.

It should be noted that the timing for performing the transmission processing of images may be other than the time when the management unit 121 stores the images. For example, an image capturing unit may be included in the image management apparatus 101, and the transmission processing of images may be performed at the timing when the image capturing unit performs image capturing for obtaining the images. Alternatively, a generation unit of images may be included in the image management apparatus 101, and the transmission processing may be performed at the timing when the generating unit generates the images.

In addition, the display control unit 122 may display, on the terminal 102, a UI screen for deleting images stored in the management unit 121, and an image designated by the user may be deletable.

In addition, the image analysis unit 125 may cache the result of image analysis in the management unit 121. If the analysis of a certain image is required again, the result cached in the management unit 121 may be returned, instead of performing image analysis and returning the result.

It should be noted that a transmitted image may be deleted from the image management table 320 so as not to be transmitted again, or a flag indicating that transmission has been performed may be provided, and the value of the flag may be changed to a value indicating that transmission has been performed.

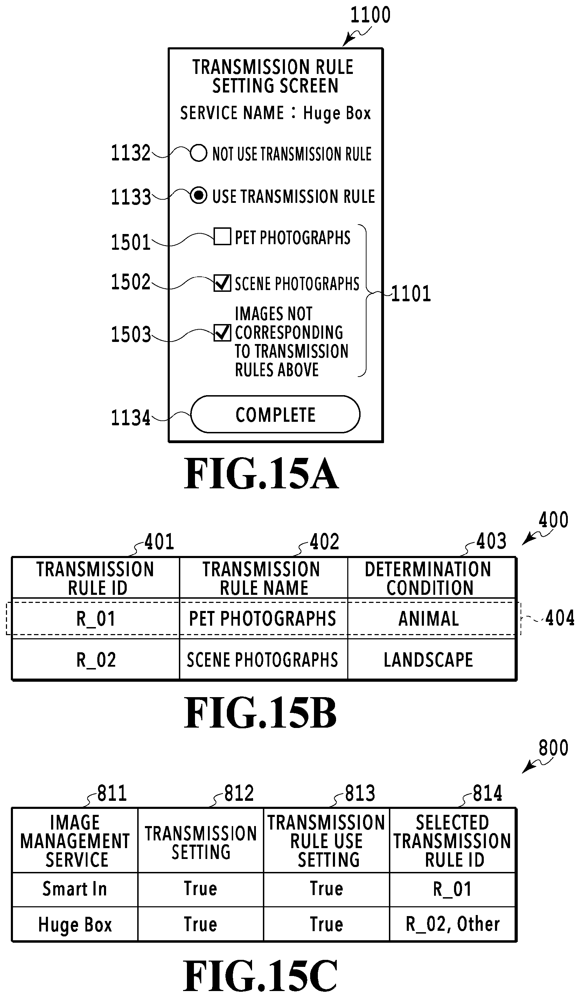

Figs. 15A to 15C are diagrams for describing the processing in a case where there are two generation transmission rules. As illustrated in Fig. 15B, in order to sort out images including a landscape, it is assumed that a generation transmission rule is added that has a determination condition of "landscape", a transmission rule name of "scene photographs", and a transmission rule ID of "R_02."

If the generation transmission rule management table 400 in Fig. 15B is stored, the transmission rule setting screen 1100 in a case where the second radio button 1133 in the transmission rule setting screen 1100 is pressed is in the state as in Fig. 15A. In this manner, check boxes 1501 and 1502 for selecting two or more generation transmission rules and a check box 1503 for selecting the non-corresponding rule are displayed.

For example, although not illustrated, assume that both the check boxes 1501 and 1502 for selecting the generation transmission rules are set to the selected state, and the complete button 1134 is pressed. In this case, "Huge Box", which is the target image management service, is associated with "R_01", which indicates the transmission rule for sorting out images of animals, and "R_02", which indicates the transmission rule for sorting out images of landscape, in the transmission setting management table 800. In this case, in the transmission processing of images in S214 in Fig. 2, images including animals or images including landscapes are sorted out, and the sorted out images are transmitted to "Huge Box."

In addition, for example, as illustrated in Fig. 15A, assume that the check box 1502 for selecting the generation transmission rule is set to the selected state, and the check box 1503 corresponding to the non-corresponding rule is set to the selected state, and the complete button 1134 is pressed. In this case, as illustrated in Fig. 15C, "Huge Box" is associated with "R_02", which indicates the transmission rule for sorting out images of landscapes, and "Other", which indicates the non-corresponding rule, in the transmission setting management table 800. In this case, in the transmission processing of images in S214, images including landscapes, or images including neither landscapes nor animals are sorted out, and the sorted out image are transmitted to "Huge Box." That is, even in a case where a generation transmission rule other than the generation transmission rule having a determination condition of "animal" is generated, it is possible to perform the setting for transmitting images other than the images including animals to the target image management service.

There are cases in which the user desires to transmit specific images of a plurality of images obtained by image capturing to an external storage A, and to transmit images other than the specific images to an external storage B. In this case, in the method of Japanese Patent Laid-Open No. 2013-45352, it becomes necessary for the user to generate an allocation rule 1 for allocating specific images, and to further generate an allocation rule 2 for allocating images other than the specific images. If the allocation rule 1 is a rule for sorting out images having an object category of animal, in order to generate the allocation rule 2, it is necessary to generate an allocation rule by designating conditions so as to select all the object categories other than animal. In particular, in a case where the allocation rule 1 is a rule for allocating images based on a plurality of conditions, in order to generate the allocation rule 2, the user needs to designate the plurality of conditions one by one, which is complicated. As described above, generating a rule for sorting out images other than specific images becomes a burden on the user.

According to the technique of the present disclosure, the burden on the user in sorting out images can be reduced.

### <Embodiment 2>

In the present embodiment, a description will be given of, in a case where a generation transmission rule is deleted, the processing of updating the value of a selected transmission rule ID associated with an image management service. The present embodiment will be described mainly of the differences from Embodiment 1. The configuration and processing in the present embodiment are the same as those in Embodiment 1, unless otherwise specified.

### [Flow of Deletion Processing of Generation Transmission Rule]

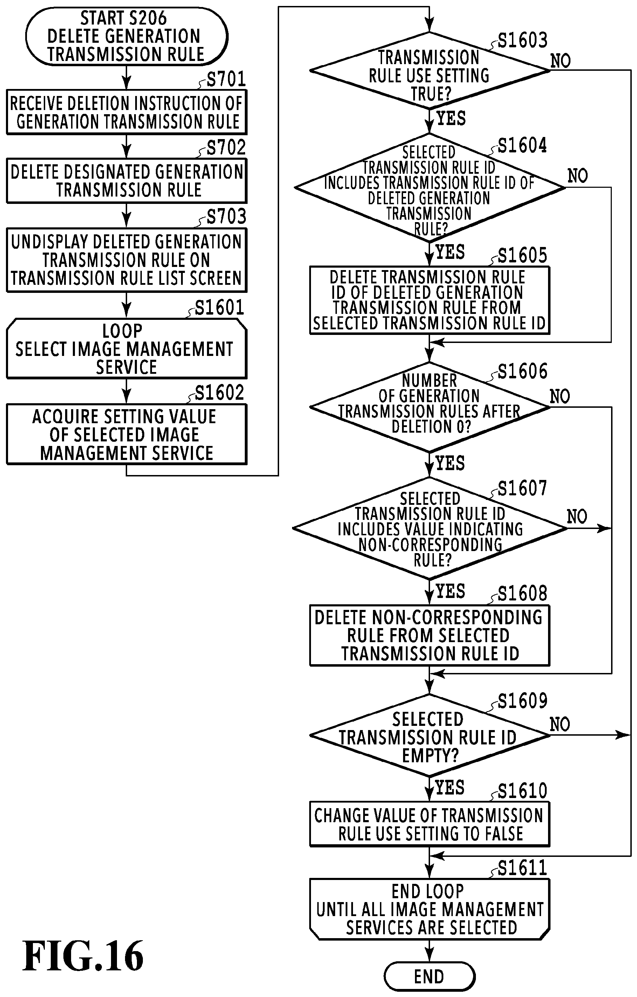

Fig. 16 is a flowchart illustrating the details of the deletion processing of a generation transmission rule to be performed in S206 in Fig. 2 by the image management apparatus 101 in the present embodiment. The processing illustrated in Fig. 16 is realized by the computation unit 113 of the image management apparatus 101 executing the program stored in the storage unit 112. A part or all of the functions of the steps in Fig. 16 may be realized by hardware, such as an ASIC or an electronic circuit.

In the description of the flowchart in Fig. 16, it is assumed that, at the start of the flowchart, the generation transmission rule management table 400 illustrated in Fig. 4 is stored in the management unit 121. In the flowchart in Fig. 16, the steps that are the same as the steps in the flowchart in Fig. 7 in Embodiment 1 are also denoted by the same numbers in Fig. 16.

It is assumed that, at the start of the flowchart in Fig. 16, the transmission rule list screen 501 in Fig. 5D is displayed on the terminal 102. The user presses the deletion button 533 corresponding to the generation transmission rule having a transmission rule ID of "R_01" in the transmission rule list screen 501 in FIG. 5D. In this case, in S701, the setting unit 124 receives an instruction for deleting the generation transmission rule having a transmission rule ID of "R_01" from the terminal 102.

In S702, the management unit 121 deletes the generation transmission rule having a transmission rule ID of "R_01" from the generation transmission rule management table 400 in Fig. 4 stored in the storage unit 112. Since there is only one generation transmission rule in Fig. 4, the number of generation transmission rules stored in the storage unit 112 after the deletion of the generation transmission rule is none (zero).

In S703, the display control unit 122 performs processing of displaying, on the terminal 102, the transmission rule list screen 501 in Fig. 5A that does not include the transmission rule having a transmission rule ID of "R_01."

### (Case 1)

In the present embodiment, in a case where the generation transmission rule is deleted, the value of the transmission rule ID indicating the deleted generation transmission rule is deleted from the column 814 that holds the selected transmission rule ID in the transmission setting management table 800 stored in the storage unit 112. In Case 1, a description will be given of the flow of the processing of S1601 to S1611 in that case. In Case 1, a description will be given by assuming that, at the start of the flowchart in Fig. 16, the transmission setting management table 800 illustrated in Fig. 8C is stored.

S1601 to S1611 constitute loop processing. In S1601, the management unit 121 selects an image management service to be processed, from the linked image management services. Then, the management unit 121 performs the processing of S1602 to S1610 on the image management service to be processed. In S1611, if it is determined that there are image management service that have not been selected, the processing returns to S1601, a new image management service to be processed is selected from the unselected image management services, and the processing of S1602 to S1610 is repeated. In the present embodiment, a processing target is selected from "Smart In" and "Huge Box", which are the linked image management services. First, a description will be given by assuming that "Smart In" has been selected as the image management service to be processed.

In S1602, the management unit 121 acquires the value associated with the image management service to be processed, from the transmission setting management table 800.

If the image management service to be processed is "Smart In", the management unit 121 acquires the value from the row 801 associated with "Smart In" from the transmission setting management table 800 in Fig. 8C.

In S1603, the management unit 121 determines whether or not the value of the transmission rule use setting associated with the image management service to be processed is "True", which indicates being enabled. If the management unit 121 determines that the value of the transmission rule use setting is "True" (YES in S1603), the processing proceeds to S1604. If the management unit 121 determines that the value of the transmission rule use setting is "False" (NO in S1603), the processing proceeds to S1611.

For the image management service "Smart In", as illustrated in Fig. 8C, the value of the transmission rule use setting held in the column 813 of the row 801 is "True." Therefore, the management unit 121 determines YES in S1603, and the processing proceeds to S1604.

In S1604, the management unit 121 determines whether or not the value of the selected transmission rule ID associated with the image management service to be processed includes the value of the transmission rule ID of the generation transmission rule deleted in S702. If the management unit 121 determines that the value of the transmission rule ID of the deleted generation transmission rule is included (YES in S1604), the processing proceeds to S1605. If it is determined that the value of the transmission rule ID of the deleted generation transmission rule is not included (NO in S1604), S1605 is skipped, and the processing proceeds to S1606.

In S1605, the management unit 121 deletes the value of the transmission rule ID indicating the generation transmission rule deleted in S702, from the value of the selected transmission rule ID associated with the image management service to be processed in the transmission setting management table 800. The transmission setting management table 800 to which the result has been reflected is stored in the storage unit 112. Then, the processing proceeds to S1606.

For the image management service "Smart In", as illustrated in Fig. 8C, the value of the selected transmission rule ID held in the column 814 of the row 801 is "R_01." In addition, as described above, the value of the transmission rule ID indicating the generation transmission rule deleted in this case is "R_01." Therefore, in S1604, the management unit 121 determines YES, and the processing proceeds to S1605. In S1605, the management unit 121 deletes "R_01" from the value of the selected transmission rule ID associated with the image management service "Smart In", which is held in the column 814 of the row 801 in the transmission setting management table 800 illustrated in Fig. 8C. As a result, the value of the selected transmission rule ID held in the column 814 of the row 801 in the transmission setting management table 800 becomes "empty." The management unit 121 stores the transmission setting management table 800 in which the value "empty" is held in the column of the selected transmission rule ID of the row 801.

In S1606, the management unit 121 determines whether the number of transmission rules held in the generation transmission rule management table 400 after the deletion of the generation transmission rule is 0. If it is determined that the number of transmission rules is 0 (YES in S1606), the processing proceeds to S1607. If there is one or more generation transmission rules in the generation transmission rule management table 400 (NO in S1606), the processing proceeds to S1609.

In S1607, the management unit 121 determines whether "Other", which indicates the non-corresponding rule, is included in the value of the selected transmission rule ID associated with the image management service to be processed in the transmission setting management table 800. If the management unit 121 determines that the non-corresponding rule is included (YES in S1607), the processing proceeds to S1608. If the management unit 121 determines that the non-corresponding rule is not included (NO in S1607), the processing proceeds to S1609.

In a case where the generation transmission rule management table 400 at the start of the flowchart is as in Fig. 4, and the generation transmission rule is deleted from the generation transmission rule management table 400, the number of generation transmission rules becomes 0. In this case, the management unit 121 determines YES in S1606, and the processing proceeds to S1607. For the image management service "Smart In", as illustrated in Fig. 8C, "Other" is not included in the value of the selected transmission rule ID held in the column 814 of the row 801. Therefore, if the transmission setting management table 800 in Fig. 8C is stored, the management unit 121 determines NO in S1607, and the processing proceeds to S1609.

In S1609, the management unit 121 determines whether or not the selected transmission rule ID associated with the image management service to be processed in the transmission setting management table 800 is "empty." If the management unit 121 determines that the selected transmission rule ID is "empty" (YES in S1609), the processing proceeds to S1610. If the management unit 121 determines that the selected transmission rule ID is not "empty" (NO in S1609), S1610 is skipped, and the processing proceeds to S1611.

In S1610, the management unit 121 changes the value of the transmission rule use setting associated with the image management service to be processed in the transmission setting management table 800 to "False." The transmission setting management table 800 to which the result has been reflected is stored in the storage unit 112. Then, the processing proceeds to S1611.

In the case of the state of Fig. 8C before the start of the flowchart, as a result of performing S1605 as described above, the value of the column 814 of the row 801 associated with the image management service "Smart In" in the transmission setting management table 800 has been changed to "empty." Therefore, in S1609, the management unit 121 determines YES, and the processing proceeds to S1610. As a result of S1610, the value of the column 813 of the row 801 associated with the image management service "Smart In" is changed to "False." As a result, the stored transmission setting management table 800 is in the state illustrated in Fig. 8B.

In S1611, since the management unit 121 has not completed the processing for all the image management services, the processing returns to S1601.

In S1601, the transmission control unit 123 selects an unselected "Huge Box" from the linked image management services as a processing target, and the processing of S1602 to S1610 is repeated.

In S1602, the management unit 121 acquires the setting of the image management service "Huge Box" from the transmission setting management table 800 in Fig. 8B stored in the storage unit 112. In the transmission setting management table 800 in Fig. 8B, since the value of the transmission rule use setting associated with the image management service "Huge Box" is "False", it is determined to be NO in S1603, and the processing proceeds to S1611.

In S1611, since the processing is completed for all the image management services, the flowchart ends.

### (Case 2)

In Case 2, a description will be given of the flow of the processing of deleting the value of the transmission rule ID indicting the non-corresponding rule from the column 814 that holds the selected transmission rule ID in the transmission setting management table 800 stored in the storage unit 112, if a generation transmission rule is deleted. In Case 2, a description will be given by assuming that, at the start of the flowchart in Fig. 16, the transmission setting management table 800 illustrated in Fig. 8F is stored.

It is assumed that the processing similar to that in Case 1 is performed in S701 to S703.

In S1601, the management unit 121 selects "Smart In" as the image management service to be processed.

In S1602, the management unit 121 acquires the value from the row 801 associated with "Smart In" from the transmission setting management table 800 in Fig. 8F.

As illustrated in Fig. 8F, for the image management service "Smart In", the value of the transmission rule use setting held in the column 813 of the row 801 is "True." Therefore, the management unit 121 determines YES in S1603, and the processing proceeds to S1604.

As illustrated in Fig. 8F, for the image management service "Smart In", the value of the selected transmission rule ID held in the column 814 of the row 801 is "Other." In addition, as described above, the value of the transmission rule ID indicating the generation transmission rule deleted in this case is "R_01." In Case 2, since the deleted generation transmission rule is different from the transmission rule associated with the image management service to be processed, the management unit 121 determines NO in S1604, and the processing proceeds to S1606.

Similar to Case 1, since the current number of generation transmission rules is 0, the management unit 121 determines YES in S1606, and the processing proceeds to 1607.

As illustrated in Fig. 8F, for the image management service "Smart In", "Other" is included in the value of the selected transmission rule ID held in the column 814 of the row 801. Therefore, in Case 2, the management unit 121 determines YES in S1607, and the processing proceeds to S1608.

In S1608, the management unit 121 deletes "Other", which indicates the non-corresponding rule, from the selected transmission rule ID associated with the image management service to be processed in the transmission setting management table 800. The transmission setting management table 800 to which the result has been reflected is stored in the storage unit 112. Then, the processing proceeds to S1609.

In the case of the transmission setting management table 800 illustrated in Fig. 8F, "Other" is deleted from the value of the selected transmission rule ID associated with the image management service "Smart In" held in the column 814 of the row 801. As a result, the value of the selected transmission rule ID held in the column 814 of the row 801 in the transmission setting management table 800 is "empty." The management unit 121 stores the transmission setting management table 800 in which the value "empty" is held in the column of the selected transmission rule ID of the row 801.

Since the value of the selected transmission rule ID for the image management service "Smart In" is "empty", the management unit 121 determines YES in S1609, and the processing proceeds to S1610.

In S1610, the management unit 121 changes the value of the transmission rule use setting associated with the image management service to be processed in the transmission setting management table 800 to "False." The transmission setting management table 800 to which the result has been reflected is stored in the storage unit 112. Then, the processing proceeds to S1611.

As a result of S1610, the value in the column 813 of the row 801 associated with the image management service "Smart In" is changed to "False." As a result, the stored transmission setting management table 800 is in the state illustrated in Fig. 8B.

In S1611, since the management unit 121 has not completed the processing for all the image management services, the processing returns to S1601.

In S1601, the transmission control unit 123 selects an unselected "Huge Box" from the linked image management services as a processing target, and the processing of S1602 to S1610 is repeated.

Since the value of the transmission rule use setting associated with the image management service "Huge Box" is "False", it is determined to be NO in S1603, and the processing proceeds to S1611.

In S1611, the processing is completed for all the image management services, and the flowchart ends.

As described above, in the present embodiment, in the case where the user deletes a generation transmission rule, the generation transmission rule associated with the image management service and the non-corresponding rule are automatically deleted based on the deleted generation transmission rule. Therefore, according to the present embodiment, it is unnecessary for the user to examine the transmission rule associated with the image management service, and to delete the generation transmission rule that cannot be used and the non-corresponding rule. Therefore, according to the present embodiment, user convenience can be improved.

It should be noted that in the above-described description, in the case where the column 814 holding the selected transmission rule ID in the transmission setting management table 800 in Figs. 8A to 8F becomes "empty", while the value of the transmission rule use setting is changed to "False", the value of the transmission setting in the column 812 remains "True." The setting in which the transmission setting in the column 812 is "True" and the transmission rule use setting in the column 813 is "False" means the setting of unconditionally transmitting, to the target image management service, all the images that have been uploaded from the user and that are managed by the management unit 121. In order to prevent transmission of images that the user does not intend to transmit, in S1610 in Fig. 16, the management unit 121 may change the value of the transmission setting held in the column 812 in the transmission setting management table 800 to "False". Accordingly, even in a case where the column 814 holding the selected transmission rule ID becomes "empty", the transmission control unit 123 does not transmit all the images.

In addition, the setting unit 124 may allow the user to determine the operation in the case where the column 814 holding the selected transmission rule ID becomes "empty", and may receive the content of the determination from the terminal 102. According to the content of the received determination, in S1610, the management unit 121 may determine whether or not to change the value of the transmission setting held in the column 812 in the transmission setting management table 800 to "False."

In addition, in Embodiment 2, the non-corresponding rule may not be automatically displayed in the transmission rule setting screen 1100. Even in a case where the user selects the transmission rule to be associated with the image management service only from the generation transmission rules, the deletion method of the generation transmission rule in Embodiment 2 can be applied. That is, in the case where the number of generation transmission rules becomes 0, the setting value is automatically changed to either the setting value for not transmitting images to the image management service, or the setting value for transmitting all the images to the image management service. Therefore, since the burden on the user for changing the setting value is reduced, user convenience can be improved.

### <Other Embodiments>

Although the examples of the processing in the image management apparatus 101 has been described in the above-described embodiments, the present disclosure is not limited to the above-described embodiments, and various modifications may be made. In addition, a part of the above-described embodiments may be appropriately combined. Although the information has been described as being managed in the table format, the method of managing information is not limited to the table format, and may be managed in other formats such as the JSON format.

The image management apparatus 101 may include an authentication system, and the communication unit 111 may add a user ID and a password to the content of communication with the terminal 102. In addition, the content of communication with the terminal 102 may be encrypted to be transmitted and received.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (101) comprising:
a management unit (121) configured to manage images of a user;
a sort unit (125) configured to sort out, from the managed images, an image that matches a rule selected by the user; and
a display control unit (122) configured to display a first setting screen for the user to select the rule,
wherein the first setting screen (1100) includes, as the rule, a first rule generated by the user and a second rule for sorting out an image that does not match the first rule (S1303).

2. The information processing apparatus according to claim 1, further comprising:
a transmission control unit configured to transmit a target image out of the managed images to an external apparatus as a transmission destination.

3. The information processing apparatus according to claim 2, wherein
the transmission control unit
transmits the target image that matches the first rule to an external apparatus selected in the first setting screen in which the first rule is selected by the user, and
transmits the target image that matches the second rule to an external apparatus selected in the first setting screen in which the second rule is selected by the user.

4. The information processing apparatus according to claim 2 or 3, wherein
the display control unit
displays a second setting screen for the user to select whether to enable or disable transmission setting for automatically transmitting the target image out of the managed images to the external apparatus as the transmission destination, and
displays the first setting screen in a case where the user selects to enable the transmission setting.

5. The information processing apparatus according to claim 4, wherein
the display control unit displays a button for displaying the first setting screen in the second setting screen in response to selection to enable the transmission setting in the second setting screen, and displays the first setting screen in response to the button being pressed.

6. The information processing apparatus according to claim 4 or 5,wherein,
in a case where the transmission setting is enabled, the transmission control unit transmits the target image out of the managed images to the external apparatus without an instruction by the user.

7. The information processing apparatus according to any one of claims 4 to 6, wherein
the first setting screen is a screen for selecting the first rule or the second rule to be associated with the external apparatus, and
the transmission control unit transmits the target image that matches the first rule to a first external apparatus in a case where the first rule is associated with the first external apparatus, and transmits the target image that matches the second rule to a second external apparatus in a case where the second rule is associated with the second external apparatus.

8. The information processing apparatus according to any one of claims 4 to 7, further comprising:
a rule management unit configured to manage a rule generated by the user, wherein the first rule is the rule generated by the user,
wherein, in a case where the transmission setting is enabled and a number of the first rules managed by the rule management unit is one or more, the display control unit displays the first setting screen in which the user can select the first rule and the second rule.

9. The information processing apparatus according to any one of claims 2 to 8, further comprising:
a rule management unit configured to manage a rule generated by the user, wherein the first rule is the rule generated by the user,
a deleting unit configured to delete the first rule managed by the rule management unit.

10. The information processing apparatus according to claim 9, further comprising:
a setting unit configured to set one of a first setting value for not transmitting the managed images to the external apparatus, a second setting value for transmitting all the managed images to the external apparatus, and a third setting value for transmitting an image that matches the rule out of the managed images to the external apparatus,
wherein the transmission control unit performs control for transmitting an image to the external apparatus based on setting by the setting unit, and
in a case where the third setting value is set and a number of the first rule managed by the rule management unit becomes 0 as a result of the first rule managed by the rule management unit being deleted, the setting unit sets the first setting value or the second setting value.

11. The information processing apparatus according to any one of claims 1 to 10 claim 1, wherein,
in a case where the first rule includes a plurality of first rules generated by the user, the sort unit sorts out an image that does not match any of the plurality of first rules as the image that matches the second rule.

12. The information processing apparatus according to any one of claims 1 to 11,
wherein the display control unit performs control so that the first setting screen is displayed on a terminal via a network.

13. An information processing apparatus comprising:
a management unit configured to manage images of a user (320);
a rule management unit configured to manage a rule generated by a user (400);
a sort unit configured to sort out, from the managed images, an image that matches a rule selected by the user (125);
a display control unit configured to display a setting screen for the user to select the rule (122);
a setting unit configured to set one of a first setting value for not transmitting the managed images to an external apparatus, a second setting value for transmitting all the managed images to the external apparatus, and a third setting value for transmitting an image that matches the rule out of the managed images to the external apparatus (800);
a deleting unit configured to delete the rule managed by the rule management unit (S702); and
a transmission control unit configured to transmit a target image out of the managed images to the external apparatus based on setting by the setting unit (123),
wherein in a case where the third setting value is set and a number of the rule managed by the rule management unit becomes 0 as a result of the rule managed by the rule management unit being deleted, the setting unit sets the first setting value or the second setting value (S1608).

14. An information processing method comprising:
managing images of a user (121);
sorting out, from the managed images, an image that matches a rule selected by the user (125); and
displaying a first setting screen for the user to select the rule (122),
wherein the first setting screen (1100) includes, as the rule, a first rule generated by the user and a second rule for sorting out an image that does not match the first rule (S1303).

15. A program for causing a computer to execute each unit of the information processing apparatus according to any one of claims 1 to 13.
